# EUROPEAN PATENT APPLICATION

(11) **EP 3 035 215 A1**
(43) Date of publication of application: **22.06.2016**
(21) Application number: 15200167.3
(22) Date of filing: 15.12.2015
(51) Int. Cl.: G06F 17/30

(54) **FILE SYSTEM, CONTROL METHOD FOR FILE SYSTEM, AND CONTROL PROGRAM FOR FILE SYSTEM**

(30) Priority: 19.12.2014 JP 2014257129
(71) Applicant: FUJITSU LIMITED, Kawasaki-shi, Kanagawa 211-8588 (JP)
(72) Inventor: MIZUNO, Hideki, Kawasaki-shi,, Kanagawa 211-8588 (JP); HASHIMOTO, Tsuyoshi, Kawasaki-shi,, Kanagawa 211-8588 (JP)
(74) Representative: Ward, James Norman

(57) **Abstract**

A file system includes a first storage device; a second storage device storing data, stored in a main, to be written in the first storage device; a management unit that manages issuance times of writing instructions; a determination unit that determines an order of writing respective metadata, serving as management data of respective data, in the first storage device based on management information indicating a management relationship between the respective metadata; an allocation unit that sequentially stores, the metadata identified by the identifiers stored corresponding to the issuance times of the writing instructions and the writing instructions corresponding to the metadata, in the second storage device based on the writing order; and a control unit that writes, when the issuance times of the writing instructions are reached, the metadata stored in the second storage device before the writing instructions corresponding to the reached issuance times, in the first storage device.

## Description

### FIELD

The present invention relates to a file system, a control method for the file system, and a control program for the file system.

### BACKGROUND

When an information processing apparatus such as a file server writes data in, for example, a non-volatile storage device (hereinafter suitably referred to as a secondary storage device), the data to be written and metadata managing the data to be written (see, For example, Japanese Translation of PCT Application No. 2004-513423) are written in the secondary storage device. For example, if the information processing apparatus abnormally terminates before ending the writing of the data, there is a likelihood that the consistency between the metadata written in the secondary storage device or the consistency of the metadata itself (hereinafter suitably referred to as the consistency of the metadata) is lost. When the consistency of the metadata is lost after the occurrence of the abnormal termination, the information processing apparatus performs processing for recovering the consistency of the metadata. In view of the above circumstances, there have been proposed technologies for maintaining the consistency of metadata even if information processing apparatuses abnormally terminate. For example, Japanese Patent Application Laid-open No. 2004-513423 and No. 2008-97618 describes the assurance of the consistency of metadata.

An example of such technologies will be described. Here, it is assumed that first data, first metadata managing the first data, and second metadata managing the first metadata are written in a secondary storage device. According to the technology, the order of writing the data is determined based on the management relationship between the data and the metadata and the management relationship between the metadata. Then, the first data, the first metadata, and the second metadata are written in the secondary storage device in the determined writing order.

### SUMMARY

Data management software returns control to application software after the data is written in the secondary storage device. In order to reduce a time for returning the control to the application software, a volatile storage device that temporarily stores the data to be written in the secondary storage device is, for example, provided at the front stage of the secondary storage device. Hereinafter, the storage device provided at the front stage of the secondary storage device will be suitably referred to as a cache memory.

When receiving an instruction to write the data stored in a main storage device in the secondary storage device from, for example, the application software, the data management software of the information processing apparatus stores the data and the metadata of the data stored in the main storage device in the cache memory. Then, after the storage, the data management software notifies the application software of the fact that the data and the metadata have been stored and returns the control to the application software. Note that the data stored in the cache memory is to be written in the secondary storage device.

As described above, the data management software returns the control to the application software after storing the data in the cache memory to reduce the time for returning the control to the application software. Note that the reduction is allowed since the operation speed of the cache memory is faster than the writing speed of the secondary storage device.

It is assumed that data management software employing the above technology determines to write first data, first metadata, and second metadata in a secondary storage device in this order. In this case, the data management software sequentially stores the first data, the first metadata, and the second metadata in a cache memory in this order. The first data, the first metadata, and the second metadata are temporarily stored in the cache memory before being written in the secondary storage device. Thereafter, the first data, the first metadata, and the second metadata are written in the secondary storage device.

However, when writing the first data, the first metadata, and the second metadata in the secondary storage device, the order of writing the first data, the first metadata, and the second metadata stored in the cache memory in the secondary storage device may be changed so as to minimize a delay in the writing due to a standby for the rotation of the disc of the secondary storage device. When such a change occurs, the first data, the first metadata, and the second metadata stored in the cache memory are not stored in the secondary storage device in the order determined by the data management software.

Therefore, the data management software issues writing instructions (also called I/O barriers) to instruct the explicit writing of the data in the secondary storage device. According to the I/O barrier, I/O of data after I/O barrier is surely performed after I/O of data before the I/O barrier is performed, so that the order of I/O to the secondary storage device is maintained. By the I/O barriers, the data stored in the cache memory before the issuance of the I/O barriers is reliably stored in the secondary storage device with the same order.

By the I/O barriers, the first data, the first metadata, and the second metadata are reliably written in the secondary storage device in this order.

However, when the I/O barriers are frequently issued, it normally takes a longer time to return control to application software. As a result, the running speed of the application software reduces. Therefore, there has been a demand for reducing the number of the issuance times of the I/O barriers.

An aspect of an embodiment has an object of reducing the number of the issuance times of writing instructions to instruct the explicit writing of data in a storage device.

An first aspect of an embodiment is a file system includes a first storage device; a second storage device that stores data to be written in the first storage device, the data being stored in a main storage device; a management unit that manages issuance times of writing instructions; a determination unit that determines a writing order of writing respective metadata, which serve as management data of respective data, in the first storage device based on management information indicating a management relationship between the respective metadata; an allocation unit that sequentially stores, when identifiers that identify the respective metadata and the issuance times of the respective writing instructions are stored so as to be associated with each other, the metadata identified by the identifiers stored corresponding to the issuance times of the writing instructions and the writing instructions corresponding to the metadata, in the second storage device based on the determined writing order; and a control unit that writes, when the issuance times of the writing instructions are reached, the metadata which is stored in the second storage device before the writing instructions corresponding to the reached issuance times, in the first storage device.

According to an aspect, it is possible to reduce the number of the issuance times of writing/deleting instructions to instruct the explicit writing/deleting of data in a storage device.

### BRIEF DESCRIPTION OF DRAWINGS

FIG. 1 is a block diagram illustrating an entire system SYS in an embodiment.
FIG. 2 is a hardware block diagram of the file server SVR of FIG. 1.
FIG. 3 is a first software block diagram of the file server SVR of FIG. 1.
FIG. 4 is a diagram schematically illustrating the hierarchical structure of files and folders.
FIG. 5 is a diagram schematically illustrating the management relationship between the files in the hierarchical structure of the files and the folders illustrated in FIG. 4.
FIG. 6 is a diagram illustrating the management information indicating the management relationship between the metadata described with reference to FIG. 5.
FIG. 7 is a first flowchart for describing the flow of the processing for assuring the writing/releasing order.
FIG. 8 is a second flowchart for describing the flow of the processing for assuring the writing/releasing order.
FIG. 9 is a third flowchart for describing the flow of the processing for assuring the writing/releasing order.
FIG. 10 is a diagram specifically illustrating the processing for writing data.
FIG. 11 is a diagram illustrating scheduling information for managing writing scheduling.
FIG. 12 is a diagram for specifically illustrating the processing for releasing data.
FIG. 13 is a diagram illustrating scheduling information for managing releasing scheduling.
FIG. 14 is a diagram schematically illustrating a state in which different metadata is stored in the same page of the RAM 102.
FIG. 15 is a diagram schematically illustrating a state in which the second-folder metadata FD2m' (before being updated) and the top metadata Tm are stored in a page PG2 of the RAM 102.
FIG. 16 is a diagram specifically illustrating the rescheduling of the metadata exemplified in FIGS. 14 and 15.
FIG. 17 is a diagram illustrating the scheduling information after the rescheduling.
FIG. 18 is a second software block diagram of the file server SVR of FIG. 1.
FIG. 19 is a diagram specifically illustrating processing for writing logs.
FIG. 20 is a diagram illustrating scheduling information in which re-grouped information is updated.

### DESCRIPTION OF EMBODIMENTS

### (First Embodiment)

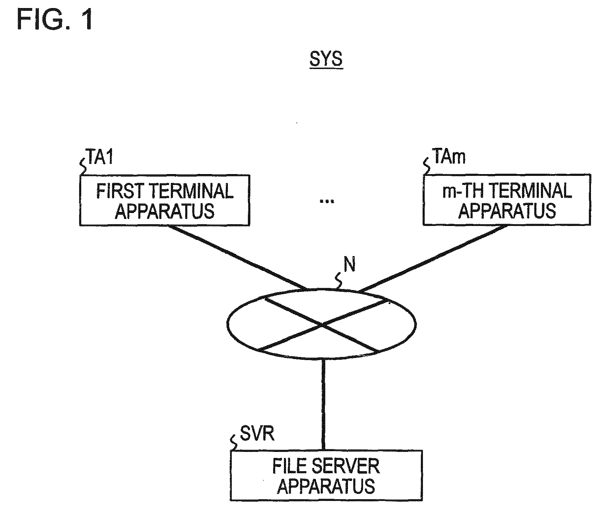

FIG. 1 is a block diagram illustrating an entire system SYS in an embodiment. Hereinafter, the same elements will be denoted by the same symbols, and their duplicated descriptions will be omitted.

The entire system SYS has a first terminal apparatus TA1 to an m-th (where m is an integer of two or more) terminal apparatus TAm and a file server apparatus SVR that stores a large amount of data, each of which is connected to a network N. The network N is, for example, a local area network (LAN). Hereinafter, the file server apparatus SVR will be suitably referred to as a file server SVR. Note that "..." represents the omission of the terminal apparatuses in FIG. 1.

The first terminal apparatus TA1 to the m-th terminal apparatus TAm access the file server SVR via the network N and store, for example, a large amount of data in the file server SVR.

### (Hardware Block of File Server)

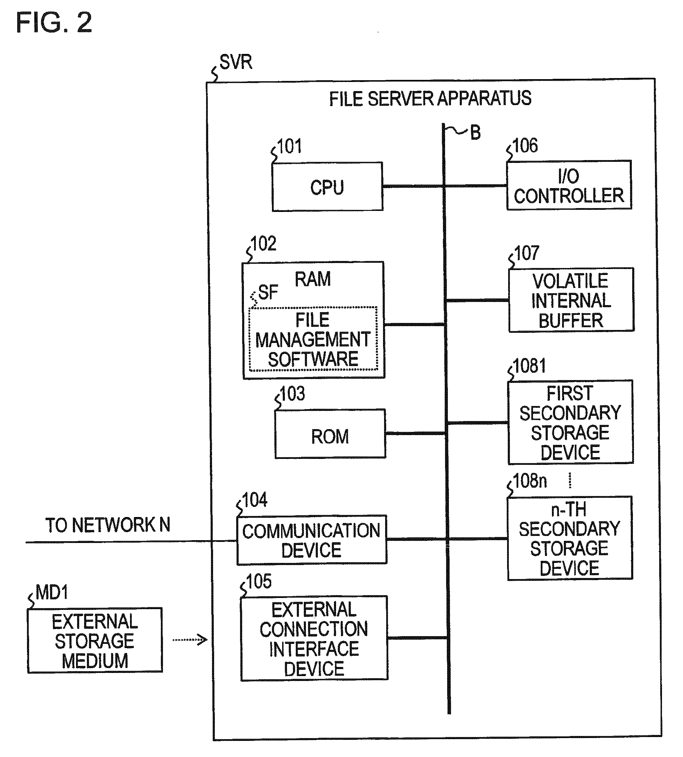

FIG. 2 is a hardware block diagram of the file server SVR of FIG. 1. The file server SVR has a CPU 101, a RAM 102, a ROM 103, a communication device 104, and an external connection interface device 105, each of which is connected to a bus B. Note that CPU is an abbreviation for "central processing unit," RAM is an abbreviation for "random access memory," and ROM is an abbreviation for "read only memory."

In addition, the file server SVR has an I/O controller 106, a volatile internal buffer 107, and a first secondary storage device 1081 to an n-th (where n is an integer of two or more) secondary storage device 108n, each of which is connected to the bus B. The file server SVR forms a file system.

The CPU 101 is a central processing unit that controls the file server SVR. The RAM 102 serving as a main storage device temporarily stores processing performed by the CPU 101, data generated (calculated) in each step performed by file management software SF, or the like. The RAM 102 stores, for example, data and the metadata of the data. The RAM 102 is, for example, a semiconductor memory such as a dynamic random access memory (DRAM). The file management software SF controls, for example, processing for writing data.

The ROM 103 stores various setting information. The communication device 104 has, for example, a network interface card (NIC) and is connected to the network N via a LAN cable to perform communication.

The external connection interface device 105 is a device that serves as an interface to be connected to various external devices. The external connection interface device 105 has, for example, a card slot and a Universal Serial Bus (USB) port. The external connection interface device 105 is connected to an external storage medium MD1.

The external storage medium MD1 is a portable non-volatile storage device such as a USB memory. Note that the file server SVR may be connected to a storage medium reading device (not illustrated), which reads data stored in a storage medium, via the external connection interface device 105. The storage medium (also called the recording medium) is, for example, a portable storage medium such as a compact disc read only memory (CD-ROM) and a digital versatile disc (DVD).

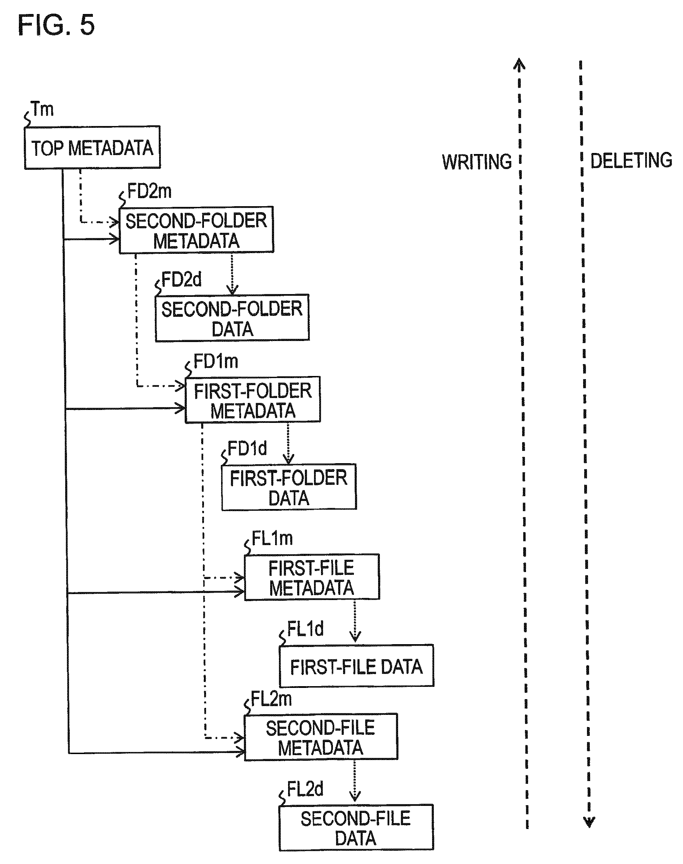

The I/O controller 106 receives a control command for instructing the writing of various data in the first secondary storage device 1081 to the n-th secondary storage device 108n and performs the writing of the various data based on the control command. Note that the various data is, for example, the data of files, the data of folders, and metadata that will be described with reference to FIG. 5.

The I/O controller 106 is an example of a control unit that performs control for writing the data stored in the volatile internal buffer 107 in the first secondary storage device 1081 to the n-th secondary storage device 108n. Note that the I/O controller 106 may be realized by software rather than being realized by hardware.

The volatile internal buffer 107 is provided at the front stage of the first secondary storage device 1081 to the n-th secondary storage device 108n. The volatile internal buffer 107 temporarily stores the data that is to be written in any of the first secondary storage device 1081 to the n-th secondary storage device 108n and stored in the RAM 102. The volatile internal buffer 107 is also called a volatile writing cache. The volatile internal buffer 107 is an example of a second storage device.

The first secondary storage device 1081 to the n-th secondary storage device 108n are secondary storage devices capable of storing a large amount of data. The secondary storage devices are, for example, high-capacity storage devices such as hard disk drives (HDDs) and solid state drives (SSDs). Each of the first secondary storage device 1081 to the n-th secondary storage device 108n is an example of a first storage device.

The first secondary storage device 1081 stores, for example, the executable file (also called the program file) of the file management software SF. At the start of the file server SVR, the CPU 101 reads the executable file of the file management software SF from the first secondary storage device 1081 and develops the same into the RAM 102. Note that the executable file may be stored in the external storage medium MD1. FIG. 2 schematically illustrates a state in which the CPU 101 develops the file management software SF into the RAM 102. Note that "..." represents the omission of the secondary storage devices in FIG. 2.

The RAM 102 stores various data such as data (hereinafter suitably referred to as files) desirably stored in the secondary storage device (for example, the first secondary storage device 1081) by a user of the file server SVR and data (hereinafter suitably referred to as metadata) for managing the data. Note that the metadata also manages other metadata.

Next, a description will be briefly given of regions (hereinafter suitably referred to as buffer regions) allocated to the RAM 102 in which the data to be written in the secondary storage devices and the data to be read from the secondary storage devices are stored. A buffer region of the RAM 102 allocated for writing is held as it is in the RAM 102 so long as the vacant memory of the RAM 102 has room, and is also used at the issuance of a system call for referring to the contents of files or the contents of metadata. In addition, a buffer region of the RAM 102 allocated for reading is held as it is in the RAM 102 so long as the vacant memory of the RAM 102 has room, and is also used at the issuance of a system call for updating data stored in the buffer region. Note that the system calls are services offered to application software (not illustrated) by an operating system (OS).

That is, there is the one-to-one correspondence relationship between data stored in the buffer regions of the RAM 102 and data corresponding to the data stored in the secondary storage devices during a period in which the buffer regions are held in the RAM 102. Note that the relationship is equivalent to that of a case in which the specific address data of a main storage device is cached in the specific position of the cache memory of the CPU. The above buffers will be sometimes called the "buffer caches of the file system."

### (Software Block of File Server)

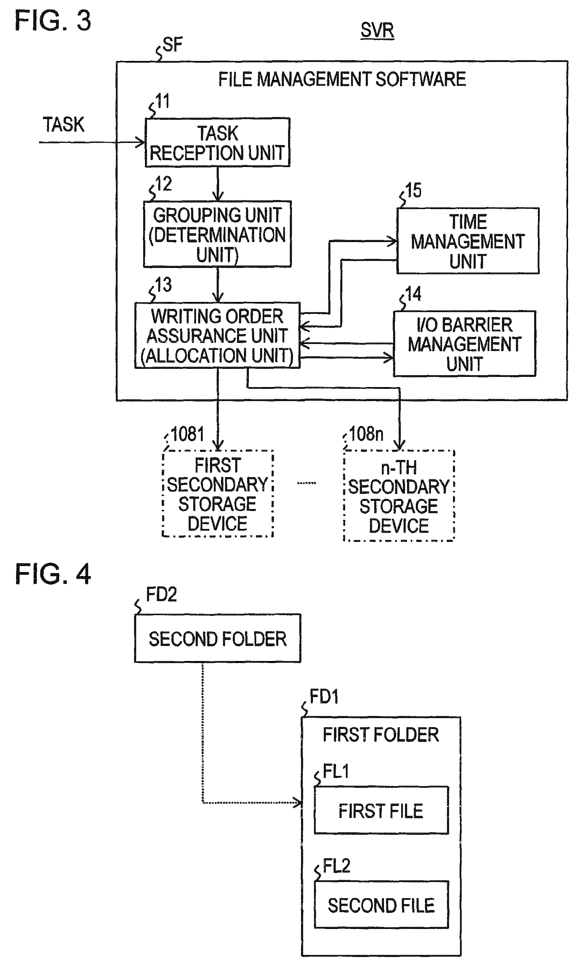

FIG. 3 is a first software block diagram of the file server SVR of FIG. 1. The file management software SF has a task reception unit 11, a grouping unit (determination unit) 12, a writing order assurance unit (allocation unit) 13, an I/O barrier management unit 14, and a time management unit 15. Hereinafter, the grouping unit (determination unit) 12 will be suitably referred to as a grouping unit 12, and the writing order assurance unit (allocation unit) 13 will be suitably referred to as a writing order assurance unit 13. Note that the first secondary storage device 1081 to the n-th secondary storage device 108n that serve as hardware elements are denoted by dashed lines.

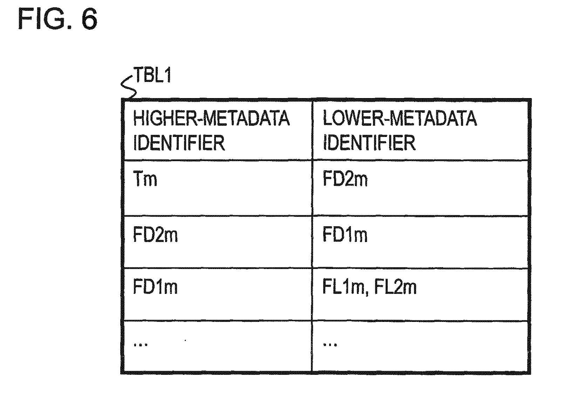

The task reception unit 11 receives the task of writing files and folders (also called directories) or the task of deleting the files and the folders. The grouping unit 12 determines the order of writing each metadata serving as the management data of each data in, for example, the first secondary storage device 1081 based on management information indicating the management relationship between metadata. The management information will be described with reference to FIG. 6.

The writing order assurance unit 13 stores the identifiers of metadata in the RAM 102 so as to be associated with the issuance times of I/O barriers based on the writing order determined by the grouping unit 12 and the above information. Here, the writing order assurance unit 13 stores at least one issuance time and the identifiers of the plurality of metadata in the RAM 102 so as to be associated with each other.

The writing order assurance unit 13 sequentially stores, based on the determined writing order, metadata identified by the identifiers stored corresponding to the issuance times of the I/O barriers and the I/O barriers corresponding to the metadata in the volatile internal buffer 107. Note that each of the I/O barriers is an example of a writing instruction. The writing order assurance unit 13 assures a releasing order when a release (delete) task is ordered, as explained later.

When the issuance times of the I/O barriers are reached, the I/O controller 106 of FIG. 2 writes metadata stored in the volatile internal buffer 107 before the I/O barriers corresponding to the issuance times in, for example, the first secondary storage device 1081.

The I/O barrier management unit 14 issues and releases the I/O barriers. The time management unit 15 manages the issuance times of the I/O barriers. Note that "..." represents the omission of the secondary storage devices in FIG. 3.

### (Confirmation and Recovery of Consistency of Metadata)

Next, a description will be given of the confirmation and the recovery of the consistency of metadata. When issuing an instruction to store the various data of the RAM 102 in the secondary storage device, the application software (not illustrated) invokes a system call (hereinafter suitably referred to as a writing system call) for writing the data in the secondary storage device.

The writing system call is used to write data such as files and metadata stored in the RAM 102 in the secondary storage device. If the file server SVR abnormally terminates before ending the writing of the data, there is a likelihood that the consistency of the metadata written in the secondary storage device is lost. Therefore, when the file server SVR restarts after the abnormal termination, the file management software SF confirms and recovers the consistency of the metadata if the consistency is lost. Note that the abnormal termination occurs, for example, when there is a failure in hardware including a system power supply or a failure in an operating system performed by the file server SVR.

The above processing for confirming and recovering the consistency of metadata is called fsck ("file system consistency check") in, for example, a Unix (trademark) operating system including Linux (trademark). Further, the processing is also called chkdsk ("check disc") or scandisk in a Windows (trademark) operating system. Further, the processing is also called Disk First Aid in a MacOS (trademark) operating system.

The above processing for confirming and recovering the consistency of metadata includes searching for the entire region of the secondary storage device in which the metadata is stored and identifying the relationships between the metadata with each other. Therefore, as the secondary storage device has greater capacity, there is a likelihood that a time for the processing increases sharply.

In view of the above circumstances, there have been proposed various technologies for maintaining the consistency of metadata. As such, a technology so-called "Soft Updates" (hereinafter suitably referred to as a metadata consistency maintaining technology) has been known. Note that the technology "Soft Updates" has been used in fast file system (FFS) that is a file management method for an operating system called FreeBSD (trademark). Next, a description will be given of the metadata consistency maintaining technology with reference to FIGS. 4 and 5.

### (Metadata Consistency Maintaining Technology)

### (Hierarchical Structure of Files and Folders)

FIG. 4 is a diagram schematically illustrating the hierarchical structure of files and folders. A first file FL1 is a file that stores first data. A second file FL2 is a file that stores second data. A first folder FD1 is a folder that stores the first file FL1 and the second file FL2. A second folder FD2 is a folder that stores the first folder FD1. The file management software SF stores the second folder FD2, the first folder FD1, the first file FL1, and the second file FL2 illustrated in FIG. 4 in, for example, the first secondary storage device 1081 of FIGS. 2 and 3. As illustrated in FIG. 4, the file management software SF manages each of the folders in the hierarchical structure; the file management software SF stores the first folder FD1 immediately below the second folder FD2 and stores the first file FL1 and the second file FL2 in the first folder FD1. Note that although there are also other folders at the upper layer of the second folder FD2, their illustration is omitted for simplifying the description.

### (Management Relationship Between Files)

FIG. 5 is a diagram schematically illustrating the management relationship between the files in the hierarchical structure of the files and the folders illustrated in FIG. 4. Of data illustrated in the lower part of FIG. 5, first-file data FL1d is the data of the first file FL1 of FIG. 4, and second-file data FL2d is the data of the second file FL2 of FIG. 4.

First-file metadata FL1m is the metadata of the first-file data FL1d. Note that the metadata includes management information managed by, for example, a data structure called an i-node. The metadata includes, for example, information of a state of allocating data blocks in the secondary storage medium in which contents of files are stored.

First-folder data FD1d is the folder data (also called the directory data) of the first folder FD1 of FIG. 4. The folder data of a folder includes, for example, information in which the identification information (for example, the file name) of a file stored in the folder and a reference symbol (also called an i-node number) for uniquely referring to the metadata of the file are associated with each other. Note that the folder data of a folder includes a reference symbol for uniquely referring to the folder and the metadata of the parent folder of the folder.

First-folder metadata FD1m is the metadata of the first-folder data FD1d. Second-folder data FD2d is the folder data of the second folder FD2 of FIG. 4. Second-folder metadata FD2m is the metadata of the second-folder data FD2d.

Top metadata Tm is the metadata that manages all the metadata. In the example of FIG. 5, the top metadata Tm is the metadata that manages the second-folder metadata FD2m, the first-folder metadata FD1m, the first-file metadata FL1m, and the second-file metadata FL2m. Note that the top metadata Tm may include information indicating whether a block-unit storage region in the secondary storage device is in use.

FIG. 5 schematically illustrates a state, in which the file data and the folder data are managed by the metadata, by dotted-line arrows. The end points of the dotted-line arrows (also called the destinations of the arrows) indicate the managed file data and the folder data. Further, the start points of the dotted-line arrows (also called the origins of the arrows) indicate the metadata that manages the file data and the folder data.

Further, FIG. 5 also illustrates a state, in which the first-folder metadata FD1m, the second-folder metadata FD2m, the first-file metadata FL1m, and the second-file metadata FL2m are managed by the top metadata Tm, by solid-line arrows. The start points of the solid-line arrows indicate the top metadata Tm, and the end points of the solid-line arrows indicate the metadata managed by the top metadata Tm.

The dashed-line arrows between the metadata indicate dependency relationship referred to determine the order of writing/releasing the data that will be described later. The dependency relationship corresponds to a hierarchical relationship in a folder hierarchy. For example, the metadata FD2m of the second folder FD2 at a layer higher than the first folder FD1 is higher than the first-folder metadata FD1m in the dependency relationship. Further, for example, the first-file metadata FL1m and the second-file metadata FL2m are lower than the first-folder metadata FD1m in the dependency relationship and are the same in level.

Here, the start points of the dashed-line arrows indicate metadata higher in the dependency relationship between the metadata. The end points of the dashed-line arrows indicate metadata lower in the dependency relationship between the metadata. For example, it is indicated that the second-folder metadata FD2m is higher than the first-folder metadata FD1m in the dependency relationship between the second-folder metadata FD2m and the first-folder metadata FD1m.

Note that folder data and the metadata of the folder data at layers higher than the second folder FD2 are omitted in FIG. 5 for a brief description. Further, broken-line arrows indicating the top and the bottom of FIG. 5 and "writing" and "deleting" near the arrows will be described later.

### (Management Information)

The file management software SF stores the above management information indicating the management relationship between metadata in the RAM 102. FIG. 6 is a diagram illustrating the management information indicating the management relationship between the metadata described with reference to FIG. 5. Note that the management information is also called a management structure. FIG. 6 illustrates the management information in a table form. In FIG. 6, a management-relationship table TBL1 has a higher-metadata identifier column and a lower-metadata identifier column. The management-relationship table TBL1 also has information indicating the management relationship and the dependency relationship between the metadata.

The higher-metadata identifier column stores the identifiers of metadata higher in the dependency relationship described with reference to FIG. 5. The lower-metadata identifier column stores the identifiers of metadata lower than the metadata identified by the identifiers of the higher metadata in the dependency relationship described with reference to FIG. 5. The metadata higher in the dependency relationship may manage the metadata lower in the dependency relationship. For example, the top metadata Tm manages the lower second-folder metadata FD2m. Note that metadata lower than the top metadata Tm is the second-folder metadata FD2m in the management information of FIG. 6.

In the example of FIG. 6, the symbols of the metadata illustrated in FIG. 5 are stored as the identifiers in the higher-metadata identifier column and the lower-metadata identifier column for illustration purpose. When the metadata is stored in the RAM 102, the identifiers of the metadata correspond to, for example, information (such as a pointer and an offset) for specifying the stored positions of the metadata in the RAM 102. The file management software SF refers to the identifiers of the metadata and accesses the metadata stored in the RAM 102.

In the example of FIG. 5, the management-relationship table TBL1 stores the identifier "Tm" of the top metadata Tm in the cell in which the second row from above crosses the higher-metadata identifier column. The management-relationship table TBL1 stores the identifier "FD2m" of the second-folder metadata FD2m immediately below the top metadata Tm identified by the higher-metadata identifier "Tm" in the cell in which the second row from above crosses the lower-metadata identifier column.

Note that the file management software SF also stores the management relationship between file data and the metadata of the file data and the management relationship between folder data and the metadata of the folder data in the RAM 102 as management information.

### (Writing of Files or Folders)

The file management software SF writes files or folders in the secondary storage device (for example, the first secondary storage device 1081) based on the above metadata consistency maintaining technology. Hereinafter, a description will be given of an example of a case in which the file management software SF writes various data in the first secondary storage device 1081.

When writing files or folders, the file management software SF allocates a data block having a data amount for the writing and writes the files or the folders in the allocated data block. Note that in the following description, the data block is a data block in the first secondary storage device 1081.

Then, the file management software SF initializes metadata that manages the files or the folders themselves. Next, the file management software SF writes entries (for example, folder data) to refer to the initialized metadata, corresponding to folders that store the written files or the parent folders of the written folders. Note that the initialization of the metadata includes the generation and the update of the metadata.

That is, when there is a hierarchical relationship in the management of a plurality of data (including metadata) in writing the files or the folders, the file management software SF updates managed data before managing data and writes the same. The above state in which the managed data is updated and written before the managing data is indicated by the broken-line arrow (see "writing") from the bottom to the top in FIG. 5.

A description will be given of an example of a case in which the files and the folders having the hierarchical structure illustrated in FIG. 4 are written in the first secondary storage device 1081. In the following description, in the case of writing of data, it is assumed that a data block corresponding to data is allocated in advance before the data is written. The file management software SF writes the first file FL1 and the second file FL2 in the first secondary storage device 1081. The file management software SF initializes the first-file metadata FL1m and the second-file metadata FL2m and writes the initialized first-file metadata FL1m and the second-file metadata FL2m in the first secondary storage device 1081.

Next, the file management software SF writes the first-folder data FD1d in the first secondary storage device 1081. Then, the file management software SF initializes the first-folder metadata FD1m and writes the initialized first-folder metadata FD1m in the first secondary storage device 1081.

Next, the file management software SF writes the second-folder data FD2d in the first secondary storage device 1081. Then, the file management software SF initializes the second-folder metadata FD2m and writes the initialized second-folder metadata FD2m in the first secondary storage device 1081. Finally, the file management software SF updates the top metadata Tm so as to reflect the above initialization of the metadata and writes the updated top metadata Tm in the first secondary storage device 1081.

The reason why the file management software SF first writes managed data as described above in writing files or folders is as follows. That is, for example, it is assumed that the file management software SF first initializes the second-folder metadata FD2m and writes the initialized second-folder metadata FD2m in the first secondary storage device 1081 contrary to the above example. Then, it is assumed that the file management software SF writes the second-folder data FD2d in the first secondary storage device 1081 after the above writing. Further, it is assumed that the file server SVR abnormally terminates before the second-folder data FD2d is written.

When the file server SVR restarts after the abnormal termination, it is unclear what type of data is to be stored in the storage region of the first secondary storage device 1081 managed by the second-folder metadata FD2m. That is, the inconsistency of metadata occurs. In order to prevent the inconsistency of the metadata, the file management software SF first writes managed data in writing files or folders.

### (Deleting of Files or Folders)

A description will be given of a case in which the file management software SF deletes files or folders based on the above metadata consistency maintaining technology. In the following description, the release of data includes deleting the data from the secondary storage device (for example, the first secondary storage device 1081).

When deleting files, the file management software SF deletes references to (the reference symbols) of the metadata of the deleted files from the folder data of folders that store the deleted files. Further, when deleting folders, the file management software SF deletes references to the metadata of the deleted folders from the folder data of parent folders that store the deleted folders. Then, the file management software SF releases the metadata itself and releases a data block managed by the metadata.

That is, when there is a hierarchical relationship in the management of a plurality of data (including the metadata) in deleting files or folders, the file management software SF updates and releases managed data after managing data. The above state in which the managed data is updated and released after the managing data is indicated by the broken-line arrow (see "deleting") from the top to the bottom in FIG. 5.

A description will be given of an example of a case in which the file management software SF deletes the generated first file FL1, the second file FL2, and the first folder FD1 from the first secondary storage device 1081. A release task for deleting the files FL1, FL2 and folder FD1 includes updating the metadata and data Tm, FD2m and FD2d managing FL1, FL2 and FD1, writing the updated metadata and data Tm, FD2m and FD2d in the secondary storage medium, and deleting metadata and data of FL1, FL2 and FD1.

First, the file management software SF updates the top metadata Tm to delete the management information of the first-folder metadata FD1m, the first-file metadata FL1m, and the second-file metadata FL2m and stores the updated top metadata Tm in the RAM 102. Next, the file management software SF updates the second-folder data FD2d so as to reflect the deletion of the first folder FD1 and stores the updated second-folder data FD2d in the RAM 102. Then, the file management software SF updates the second-folder metadata FD2m so as to reflect the update of the second-folder data FD2d and stores the updated second-folder metadata FD2m in the RAM 102.

After the updates, the file management software SF writes the updated top metadata Tm, the updated second-folder metadata FD2m, and the updated second-folder data FD2d in the first secondary storage device 1081 in this order.

Next, the file management software SF releases the first-folder metadata FD1m and then releases the first-folder data FD1d. Then, the file management software SF releases the first-file metadata FL1m and the second-file metadata FL2m. Next, the file management software SF releases the first-file data FL1d and the second-file data FL2d.

The reason why the file management software SF updates and releases managed metadata later in deleting files or folders is as follows. That is, for example, it is assumed that the file management software SF releases the first-folder data FD1d from the first secondary storage device 1081 first and then releases the first-folder metadata FD1m from the first secondary storage device 1081 contrary to the above example. Further, it is assumed that the file server SVR abnormally terminates before the first-folder metadata FD1m is released. When the filer server SVR restarts after the abnormal termination, other data may be written in the storage region of the first secondary storage device 1081 in which the released first-folder data FD1d has been written. In the process of the writing, other metadata that manages the other data is also generated. As a result, the first-folder metadata FD1m and the other metadata simultaneously manage the same storage region of the first secondary storage device 1081. That is, the inconsistency of the metadata occurs.

As described above, the file management software SF controls the writing/releasing order. Thus, even if the file server SVR restarts after the abnormal termination, the file management software SF maintains the consistency of metadata written in the secondary storage device. That is, by the above control, the file management software SF prevents a state in which a data block in the secondary storage device or data written in the secondary storage device is managed by two different metadata, i.e., the inconsistency of the metadata in the secondary storage device.

### (Changing of Writing/Releasing Order)

In order to maintain the consistency of metadata, the file management software SF determines the order of writing/releasing data based on the above metadata consistency maintaining technology and writes/releases the data in the determined order. The file management software SF outputs a writing command, which is used to write data in the secondary storage device, to the I/O controller 106. In addition, the file management software SF outputs a releasing command, which is used to release data stored in the secondary storage device, to the I/O controller 106. Note that the data releasing command may be a command for writing "0" in the region of the secondary storage device in which the data is stored.

In the case of the above example in which files or folders are written, the file management software SF outputs a writing command, which is used to instruct the sequential writing of the following various data in the secondary storage device, to the I/O controller 106. That is, the file management software SF outputs the following various data to the I/O controller 106.

That is, the file management software SF instructs the I/O controller 106 to write the first-file data FL1d, the second-file data FL2d, the first-file metadata FL1m, the second-file metadata FL2m, the first-folder data FD1d, and the first-folder metadata FD1m in the secondary storage device in this order. In addition, the file management software SF instructs the I/O controller 106 to write the second-folder data FD2d, the second-folder metadata FD2m, and the updated top metadata Tm in the secondary storage device in this order.

The I/O controller 106 receives the output various data and stores the same in the volatile internal buffer 107 (i.e., buffering). Then, after storing the received various data in the volatile internal buffer 107, the I/O controller 106 outputs an end command indicating the end of the storage to the file management software SF. The file management software SF performs next processing after receiving the end command.

Here, the plurality of various data sequentially stored in the volatile internal buffer 107 is not necessarily written in the first secondary storage device 1081 in the order in which the data is stored. The I/O controller 106 changes the order of writing the plurality of various data so as to minimize a delay in the writing due to, for example, a standby for the rotation of the disc of the secondary storage device. Further, the I/O controller 106 sequentially writes the plurality of various data in the first secondary storage device 1081 in the changed writing order.

In the above example, the I/O controller 106 may write the data in an order totally opposite to the order intended by the file management software SF. For example, the I/O controller 106 may write the top metadata Tm first, the second-folder metadata FD2m second, and the second-folder data FD2d third in the first secondary storage device 1081. Therefore, there is a case in which the data is not written in the order determined by the file management software SF. Like the order of writing data, the order of releasing data may also be changed.

### (Assurance of Writing/Releasing Order)

In order to reliably write/release data in the order determined by the file management software SF, the file management software SF needs the following processing. That is, as described above, the file management software SF issues writing instructions (I/O barriers) to perform explicit writing on the first secondary storage device 1081 to the I/O controller 106. There is no doubt that data is written and released in the order determined by the file management software SF provided that the I/O barriers are issued after various data.

However, when the I/O barriers are issued after various data, i.e., when the I/O barriers are issued frequently, the processing load of the file server SVR increases due to the issuance of the I/O barriers. As a result, the running speed of the application software reduces.

Meanwhile, when the file management software SF returns the control to a user program after receiving the end interruption of the I/O barriers notified after the issuance of the I/O barriers, it takes a longer time to return the control to the application software. As a result, the running speed of the application software reduces. The reason why it takes a longer time to return the control to the application software is that the writing speed of the first secondary storage device 1081 is lower than the operation speed of the volatile internal buffer 107.

Particularly, when processing for writing/deleting a large number of files or folders is performed, the I/O barriers are issued many times, which in turn greatly increases the processing load of the file server SVR. As a result, the running speed of the application software greatly reduces, and various processing (for example, I/O processing) is also greatly delayed. When the running speed of the application software greatly reduces as described above, the usefulness of an information processing system is likely to be lost.

However, the above metadata consistency maintaining technology does not include countermeasures for the delay in various processing due to the influence of the issuance of the I/O barriers. Therefore, it is desired to reduce the number of the issuance times of the I/O barriers.

### (Processing for Assuring Writing/Releasing Order)

In view of the above circumstances, the file server SVR of the embodiment assures a writing/releasing order while reducing the number of the issuance times of the I/O barriers. For example, the grouping unit 12 determines the order of writing first metadata, second metadata, and third metadata associated with the first metadata and the second metadata in the first secondary storage device 1081 based on the management information indicating the management relationship between metadata. The third metadata is, for example, metadata that manages the first metadata and the second metadata. Further, the third metadata associated with the first metadata and the second metadata is metadata higher or lower than the first metadata and the second metadata in the dependency relationship between the metadata described with reference to FIG. 5. For example, in FIG. 5, the metadata FD2m of the second folder FD2 is metadata associated with the first-folder metadata FD1m.

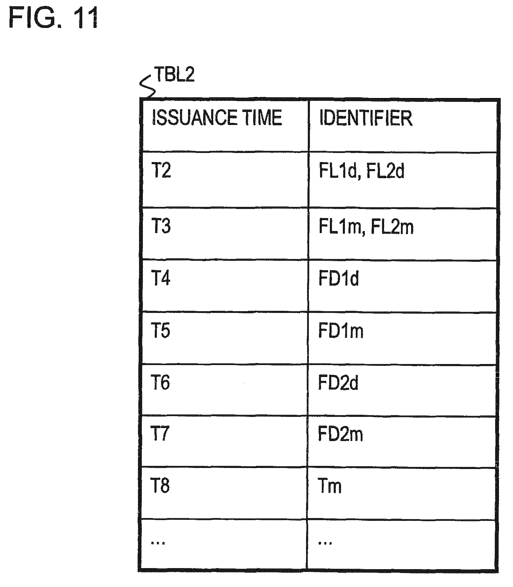

Next, the writing order assurance unit 13 stores a first issuance time of a first I/O barrier, the identifier of the first metadata, and the identifier of the second metadata in the RAM 102 so as to be associated with each other (see FIG. 11). In addition, the writing order assurance unit 13 stores a second issuance time of a second I/O barrier and the identifier of the third metadata in the RAM 102 so as to be associated with each other (see FIG. 11).

The writing order assurance unit 13 sequentially stores the first metadata and the second metadata identified by the identifier stored so as to be associated with the first issuance time of the first I/O barrier and the first I/O barrier in the volatile internal buffer 107 in the determined writing order. In addition, the writing order assurance unit 13 sequentially stores the third metadata identified by the identifier stored so as to be associated with the second issuance time of the second I/O barrier and the second I/O barrier in the volatile internal buffer 107 in the determined writing order.

When the first issuance time is reached, the I/O controller 106 of FIG. 2 writes the first metadata and the second metadata stored in the volatile internal buffer 107 before the first I/O barrier corresponding to the first issuance time in, for example, the first secondary storage device 1081. Note that the written first metadata and the second metadata are deleted from the volatile internal buffer 107. In addition, the I/O barrier management unit 14 deletes the first I/O barrier from the volatile internal buffer 107.

In addition, when the second issuance time is reached, the I/O controller 106 of FIG. 2 writes the third metadata stored in the volatile internal buffer 107 before the second I/O barrier corresponding to the second issuance time in, for example, the first secondary storage device 1081.

### (Flow of Processing for Assuring Writing/Releasing Order)

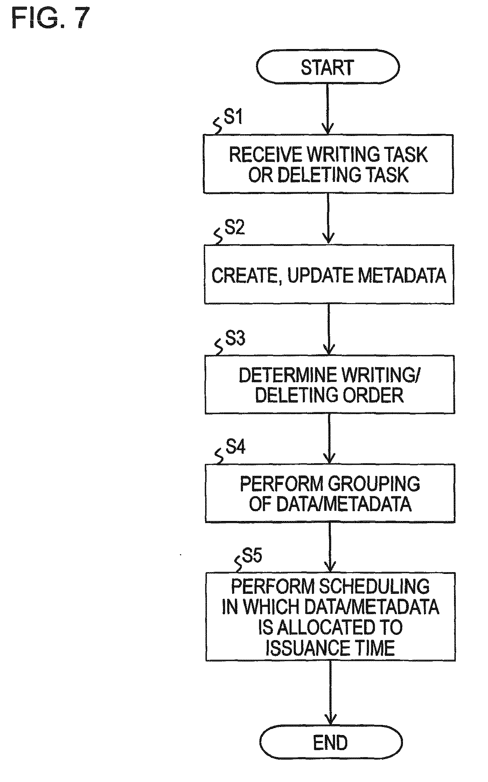

A description will be given of the flow of the processing for assuring a writing/releasing order with reference to FIGS. 7 to 9. FIG. 7 is a first flowchart for describing the flow of the processing for assuring the writing/releasing order. Note that in the following description of the flowchart, "Ss" (where the lower case s is an integer of one or more) indicates a step Ss.

Step S1: The task reception unit 11 of the file management software SF receives the task of writing files or folders or the task of deleting the files or the folders. The task of writing the files or the folders is a task including an instruction to write the files or an instruction to generate the folders in the secondary storage device (for example, the first secondary storage device 1081) of the file server SVR. Further, the task of deleting the files or the folders is a task including an instruction to delete the files or the folders from the secondary storage device (for example, the first secondary storage device 1081) of the file server SVR.

Step S2: The file management software SF generates metadata in the RAM 102 or updates metadata stored in the RAM 102 according to the content of the received task.

Step S3: The grouping unit 12 determines the order of writing/deleting various data according to the type of the task received in S1.

Step S4: The grouping unit 12 performs the grouping of the various data according to the determined writing/deleting order.

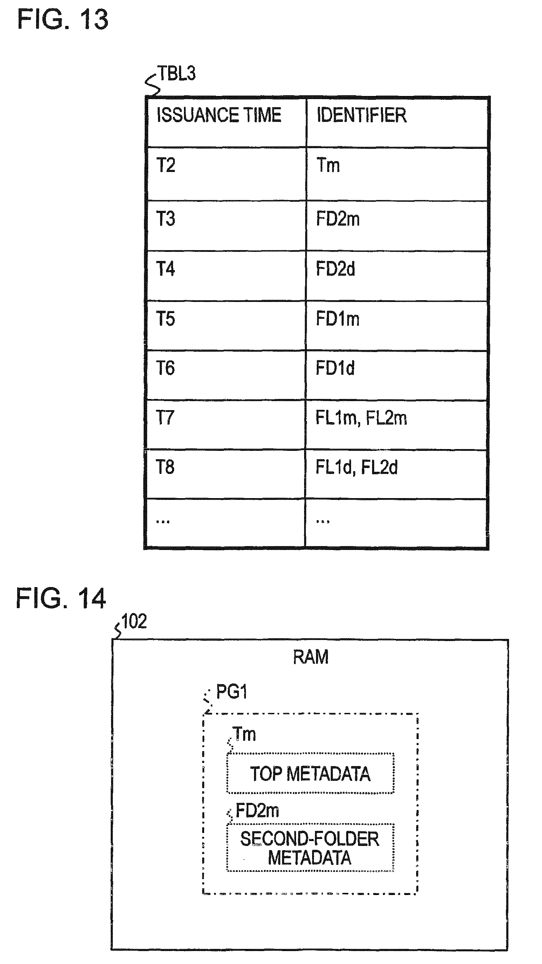

Here, when different metadata is stored in the same page of the RAM 102, the writing order assurance unit 13 performs processing for assuring the order of writing/deleting the metadata (hereinafter suitably referred to as the same-page assurance processing). Note that the same-page assurance processing will be described with reference to FIGS. 14 to 16. Note that the page has a size of, for example, four kilobytes.

Step S5: The writing order assurance unit 13 performs scheduling in which the grouped various data is allocated to issuance times managed by the time management unit 15.

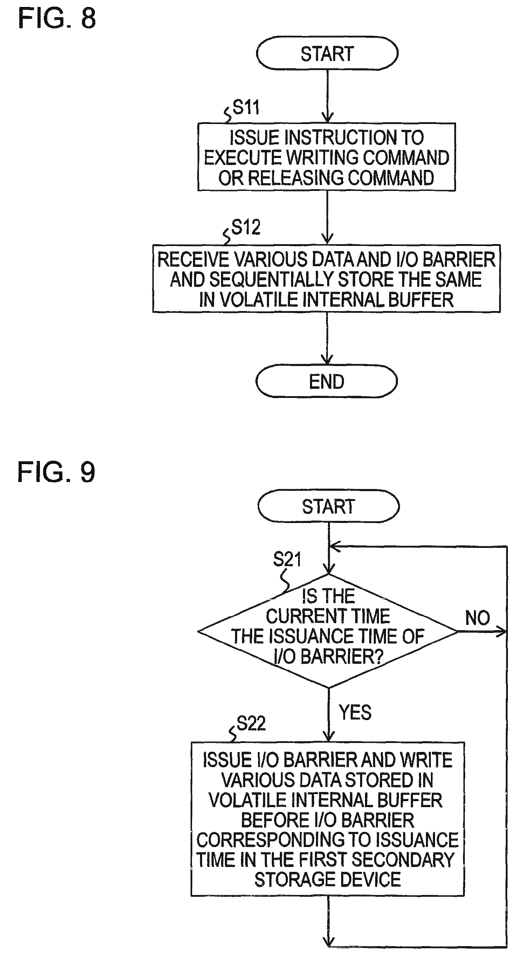

FIG. 8 is a second flowchart for describing the flow of the processing for assuring the writing/releasing order.

Step S11: The file management software SF issues an instruction to execute a writing command or a releasing command. Specifically, the writing order assurance unit 13 outputs the scheduled various data and the I/O barriers to the I/O controller 106. Note that the various data has been stored in the RAM 102. Note that the writing order assurance unit 13 acquires the I/O barriers using the I/O barrier management unit 14.

Step S12: The I/O controller 106 receives the various data and the I/O barriers and sequentially stores the same in the volatile internal buffer 107. The I/O controller 106 registers the various data and the I/O barriers in, for example, the processing waiting queue of the volatile internal buffer 107 in this order. Note that the file management software SF returns the control to the application software when receiving a command indicating the end of the storage.

FIG. 9 is a third flowchart for describing the flow of the processing for assuring the writing/releasing order.

Step S21: The writing order assurance unit 13 determines whether the current time is the issuance time of the I/O barrier. When the current time is not the issuance time of the I/O barrier (S21/NO), the processing returns to S21 to be on standby until the current time reaches the issuance time of the I/O barrier. When the current time is the issuance time of the I/O barrier (S21/YES), the processing proceeds to S22.

Step S22: The writing order assurance unit 13 instructs the I/O barrier management unit 14 to issue the I/O barrier. The I/O barrier management unit 14 issues the I/O barrier in response to the instruction. With the issuance of the I/O barrier, the I/O controller 106 stores various data, which has been stored in the volatile internal buffer 107 before the I/O barrier corresponding to the issuance time, in the first secondary storage device 1081.

When receiving a writing-end interruption notification or a releasing-end interruption notification, the I/O barrier management unit 14 releases the issued I/O barrier. The writing-end interruption notification is given after the writing command is executed to write data in the secondary storage device. The releasing-end interruption notification is given after the releasing command is executed to release data from the secondary storage device.

When receiving the above interruption notification, the I/O barrier management unit 14 outputs an end notification to the file management software SF.

### (Specific Example of Writing Data)

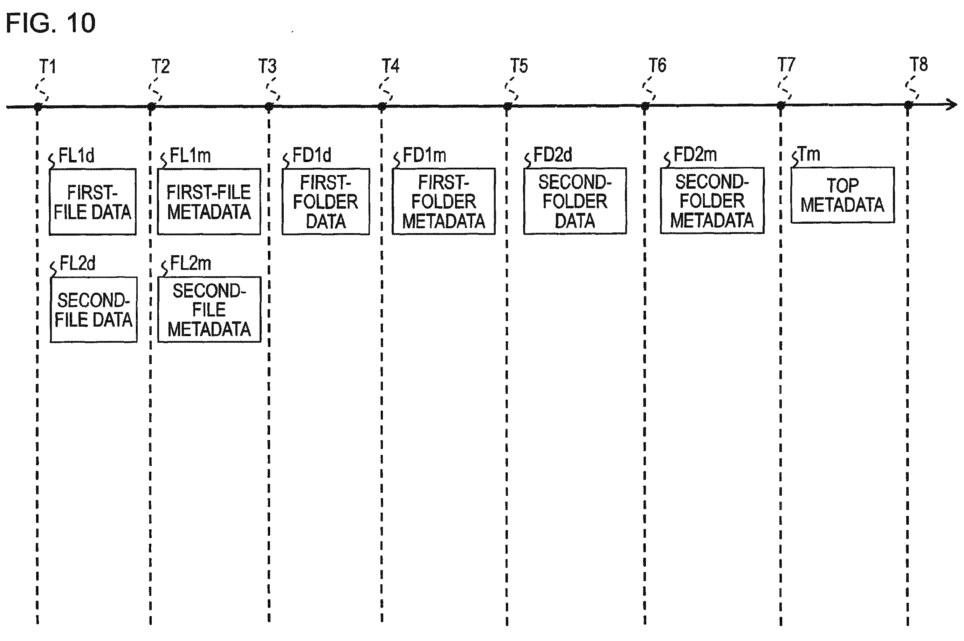

A description will be given, with reference to FIGS. 10 and 11, of a specific example of processing for writing data in a case in which metadata to be written is not stored in the same page of RAM 102. FIG. 10 is a diagram specifically illustrating the processing for writing data. The illustration exemplifies a case in which files and folders having the hierarchical structure illustrated in FIG. 4 are written in the first secondary storage device 1081.

In FIG. 10, a first time T1 to an eighth time T8 indicate the issuance times of the I/O barriers, and a state in which various data is scheduled for the issuance times of the I/O barriers is schematically illustrated.

The time management unit 15 places a prescribed time interval between an issuance time of the I/O barrier and the subsequent issuance time of the I/O barrier. The time interval is, for example, ten minutes. The issuance times of the I/O barriers are, for example, at 12:00 for the first time T1, 12:10 for the second time T2, 12:20 for the third time T3, or the like. That is, in FIG. 10, a p-th (where p is an integer of zero or more) time Tp is a time before a (p+1)-th time T(p+1). Thus, the I/O barriers are periodically issued with the constant time interval to prevent complicated timer management. Hereinafter, the issuance times will be suitably referred to as times.

The task reception unit 11 of the file management software SF receives an instruction (writing task) to write the first file FL1 and the second file FL2 illustrated in FIG. 4 in, for example, the first secondary storage device 1081 (S1). Note that the first file FL1 and the second file FL2 are stored in the first folder FD1 of the second folder FD2 as illustrated in FIG. 4.

The RAM 102 stores the first-file data FL1d, the second-file data FL2d, the first-file metadata FL1m, and the second-file metadata FL2m. In addition, the RAM 102 stores the first-folder data FD1d, the first-folder metadata FD1m, the second-folder data FD2d, the second-folder metadata FD2m, and the top metadata Tm.

The grouping unit 12 determines the following writing order based on the management-relationship table TBL1 of FIG. 6 (S3). The writing order is the order indicated by the broken-line arrow (see "writing") from the bottom to the top in the example of FIG. 5. Specifically, the grouping unit 12 determines the writing order such that the data is written in the first secondary storage device 1081 in the order from the data on the bottom side to the data on the top side in FIG. 5.

Specifically, in the writing order, the first-file data FL1d and the second-file data FL2d are written first, and the first-file metadata FL1m and the second-file metadata FL2m are written second.

The reason why the first-file metadata FL1m and the second-file metadata FL2m are written in the same order as described above is as follows. That is, this is because the first-file metadata FL1m and the second-file metadata FL2m are positioned in the same hierarchy (i.e., in the same order) in the dependency relationship as illustrated in FIG. 5. In other words, there is no hierarchy in the dependency relationship between the two file metadata (FL1m, FL2m). Therefore, even if the above two metadata (FL1m, FL2m) is in the same order, it is written in the first secondary storage device 1081 before the data higher in the dependency relationship. The data higher in the dependency relationship is the first-folder metadata FD1m in the example of FIG. 5.

In addition, the reason why the first-file data FL1d and the second-file data FL2d are written in the same order is as follows. That is, this is because the metadata FL1m of the first-file data FL1d and the metadata FL2m of the second-file data FL2d are positioned in the same hierarchy in the dependency relationship. In other words, there is no hierarchy in the dependency relationship between the above two-file metadata (FL1d, FL2d). Therefore, even if the above two-file data (FL1d, FL2d) is in the same order, it is written in the first secondary storage device 1081 before the metadata (FL1m, FL2m) of the data.

Further, in the writing order, the first-folder data FD1d is written third, and the first-folder metadata FD1m is written fourth. Further, in the writing order, the second-folder data FD2d is written fifth, the second-folder metadata FD2m is written sixth, and the top metadata Tm is written seventh.

### (Grouping)

The grouping unit 12 performs the grouping of the various data in the determined writing order (S4). A first group includes the first-file data FL1d and the second-file data FL2d that are to be written first. A second group includes the first-file metadata FL1m and the second-file metadata FL2m that are to be written second. A third group includes the first-folder data FD1d that is to be written third, and a fourth group includes the first-folder metadata FD1m that is to be written fourth. A fifth group includes the second-folder data FD2d that is to be written fifth. A sixth group includes the second-folder metadata FD2m that is to be written sixth, and a seventh group includes the top metadata Tm that is to be written seventh.

The writing order assurance unit 13 performs scheduling in which the grouped various data is allocated to the preset issuance times as illustrated in FIG. 10 (S5). Note that the writing order assurance unit 13 ends scheduling processing such that the scheduling, which will be described later, ends before the first time T1.

The writing order assurance unit 13 performs the scheduling such that the first-file data FL1d and the second-file data FL2d of the first group are written at the second time T2.

The writing order assurance unit 13 performs the scheduling such that the first-file metadata FL1m and the second-file metadata FL2m of the second group are written at the third time T3. The writing order assurance unit 13 performs the scheduling such that the first-folder data FD1d of the third group is written at the fourth time T4.

The writing order assurance unit 13 performs the scheduling such that the first-folder metadata FD1m of the fourth group is written at the fifth time T5. The writing order assurance unit 13 performs the scheduling such that the second-folder data FD2d of the fifth group is written at the sixth time T6.

The writing order assurance unit 13 performs the scheduling such that the second-folder metadata FD2m of the sixth group is written at the seventh time T7. The writing order assurance unit 13 performs the scheduling such that the top metadata Tm of the seventh group is written at the eighth time T8.

### (Scheduling Information)

The writing order assurance unit 13 stores the issuance times of I/O barriers and the identifiers of data and metadata in the RAM 102 so as to be associated with each other. Specifically, the writing order assurance unit 13 stores scheduling information (also called a management structure) for managing writing scheduling in the RAM 102.

FIG. 11 is a diagram illustrating scheduling information for managing writing scheduling. FIG. 11 illustrates the scheduling information in a table form. A scheduling table TBL2 has an issuance time column and an identifier column. The issuance time column is a column in which the issuance times of I/O barriers are stored. In the example of FIG. 11, the issuance times of the I/O barriers are stored in the issuance time column in the order of an elapse. In the example of FIG. 11, time information ("T2") indicating the second time T2 is stored in the cell of the second row of the issuance time column. Further, time information ("T3") indicating the third time T3 is stored in the cell of the third row of the issuance time column.

In the identifier column, identifiers for uniquely identifying various data scheduled for the issuance times are stored. The identifiers are the same as those of FIG. 5. Specifically, the identifiers of the various data correspond to, for example, information (for example, a pointer and an offset) for specifying the stored positions of the various data in the RAM 102 when the various data is stored in the RAM 102.

In the above example, the writing order assurance unit 13 performs the scheduling such that the first-file data FL1d and the second-file data FL2d of the first group are written at the second time T2. Therefore, the writing order assurance unit 13 stores the identifier "FL1d" of the first-file data FL1d and the identifier "FL2d" of the second-file data FL2d in the cell in which the identifier column crosses the row of the cell (T2) in which the second time T2 is stored. Note that the descriptions of the remaining times will be omitted.

### (Storage of Data in Volatile Internal Buffer)

The writing order assurance unit 13 outputs the various data scheduled for the respective issuance times and the I/O barriers (also called the I/O barriers corresponding to the issuance times) that are to be issued at the issuance times to the I/O controller 106 based on the scheduling table TBL2 of FIG. 11 (S11).

In the example of FIG. 11, the writing order assurance unit 13 outputs the following data to the I/O controller 106 (S11). That is, the writing order assurance unit 13 outputs the first-file data FL1d and the second-file data FL2d scheduled for the second time T2 and a second I/O barrier to the I/O controller 106. Next, the writing order assurance unit 13 outputs the first-file metadata FL1m and the second-file metadata FL2m scheduled for the third time T3 and a third I/O barrier to the I/O controller 106.

Then, the writing order assurance unit 13 outputs the first-folder data FD1d scheduled for the fourth time T4 and a fourth I/O barrier to the I/O controller 106. Next, the writing order assurance unit 13 outputs the first-folder metadata FD1m scheduled for the fifth time T5 and a fifth I/O barrier to the I/O controller 106. Then, the writing order assurance unit 13 outputs the second-folder data FD2d of the fifth group scheduled for the sixth time T6 and a sixth I/O barrier to the I/O controller 106. Next, the writing order assurance unit 13 outputs the second-folder metadata FD2m of the sixth group scheduled for the seventh time T7 and a seventh I/O barrier to the I/O controller 106. Then, the writing order assurance unit 13 outputs the top metadata Tm of the seventh group scheduled for the eighth time T8 and an eighth I/O barrier to the I/O controller 106.

The I/O controller 106 sequentially stores the received various data and the I/O barriers in the volatile internal buffer 107 (S12).

In the above example, the I/O controller 106 stores the received various data and the I/O barriers in the volatile internal buffer 107 in the following order (S12). That is, the I/O controller 106 stores the first-file data FL1d, the second-file data FL2d, the second I/O barrier, the first-file metadata FL1m, the second-file metadata FL2m, and the third I/O barrier in the volatile internal buffer 107 in this order. Next, the I/O controller 106 stores the first-folder data FD1d, the fourth I/O barrier, the first-folder metadata FD1m, the fifth I/O barrier, the second-folder data FD2d, and the sixth I/O barrier in the volatile internal buffer 107 in this order. Then, the I/O controller 106 stores the second-folder metadata FD2m, the seventh I/O barrier, the top metadata Tm, and the eighth I/O barrier in the volatile internal buffer 107 in this order.

### (Issuance of I/O Barriers)

In parallel with the above scheduling, the writing order assurance unit 13 determines whether the current time is the issuance time of the I/O barrier (S21). By the following processing, the various data is written in the first secondary storage device 1081 in the determined writing order.

When the current time reaches the second time T2 (S21/YES), the writing order assurance unit 13 causes the I/O barrier management unit 14 to issue the second I/O barrier (S22). With the issuance of the second I/O barrier, the I/O controller 106 writes the first-file data FL1d and the second-file data FL2d, which have been stored in the volatile internal buffer 107 before the second I/O barrier, in the first secondary storage device 1081 (S22). Then, the processing returns to S21. Note that the data stored in the volatile internal buffer 107 is released when being written in the first secondary storage device 1081.

When the current time reaches the third time T3 (S21/YES), the writing order assurance unit 13 causes the I/O barrier management unit 14 to issue the third I/O barrier (S22). With the issuance of the third I/O barrier, the I/O controller 106 writes the first-file metadata FL1m and the second-file metadata FL2m, which have been stored in the volatile internal buffer 107 before the third I/O barrier, in the first secondary storage device 1081. Then, the processing returns to S21.

When the current time reaches the fourth time T4 (S21/YES), the writing order assurance unit 13 causes the I/O barrier management unit 14 to issue the fourth I/O barrier (S22). With the issuance of the fourth I/O barrier, the I/O controller 106 writes the first-folder data FD1d, which has been stored in the volatile internal buffer 107 before the fourth I/O barrier, in the first secondary storage device 1081. Then, the processing returns to S21.

When the current time reaches the fifth time T5 (S21/YES), the writing order assurance unit 13 causes the I/O barrier management unit 14 to issue the fifth I/O barrier (S22). With the issuance of the fifth I/O barrier, the I/O controller 106 writes the first-folder metadata FD1m, which has been stored in the volatile internal buffer 107 before the fifth I/O barrier, in the first secondary storage device 1081. Then, the processing returns to S21.

When the current time reaches the sixth time T6 (S21/YES), the writing order assurance unit 13 causes the I/O barrier management unit 14 to issue the sixth I/O barrier (S22). With the issuance of the sixth I/O barrier, the I/O controller 106 writes the second-folder data FD2d, which has been stored in the volatile internal buffer 107 before the sixth I/O barrier, in the first secondary storage device 1081. Then, the processing returns to S21.

When the current time reaches the seventh time T7 (S21/YES), the writing order assurance unit 13 causes the I/O barrier management unit 14 to issue the seventh I/O barrier (S22). With the issuance of the seventh I/O barrier, the I/O controller 106 writes the second-folder metadata FD2m, which has been stored in the volatile internal buffer 107 before the seventh I/O barrier, in the first secondary storage device 1081. Then, the processing returns to S21.

When the current time reaches the eighth time T8 (S21/YES), the writing order assurance unit 13 causes the I/O barrier management unit 14 to issue the eighth I/O barrier (S22). With the issuance of the eighth I/O barrier, the I/O controller 106 writes the top metadata Tm, which has been stored in the volatile internal buffer 107 before the eighth I/O barrier, in the first secondary storage device 1081. Then, the processing returns to S21.

As described above, the grouping unit 12 receives the instruction (writing task) to write the following data in the first secondary storage device 1081. That is, the grouping unit 12 receives the instruction to write, for example, the first data (for example, the first-file data FL1d) managed by the first metadata (for example, the first-file metadata FL1m). In addition, the grouping unit 12 receives the instruction to write the second data (for example, the second-file data FL2d) managed by the second metadata (for example, the second-file metadata FL2m).

The grouping unit 12 determines the following order based on the management-relationship table TBL1 of FIG. 6. That is, the first metadata and the second metadata are written in the first secondary storage device 1081 first, and the third metadata (for example, the first-folder metadata FD1m) is written in the first secondary storage device 1081 second.

Then, as illustrated in, for example, the scheduling table TBL2 of FIG. 11, the writing order assurance unit 13 stores the first issuance time and identifiers of the first and second metadata in the RAM 102 so as to be associated with each other. The first issuance time is, for example, the third time T3, the identifier of the first metadata is, for example, "FL1m," and the identifier of the second metadata is, for example, "FL2m."

In addition, the writing order assurance unit 13 stores the second issuance time after the first issuance time and the identifier of the third metadata in the RAM 102 so as to be associated with each other. The second issuance time is, for example, the fifth time T5, and the identifier of the third metadata is, for example, "FD1m."

By the above scheduling in which the metadata of the grouped various data is allocated to the preset issuance times (see FIG. 10), the writing order may be reliably maintained.

In addition, by the scheduling, the number of the issuance times of the I/O barriers may be reduced. For example, in the above specific example of writing the data, the nine I/O barriers are issued corresponding to the nine units of the data when the I/O barriers are issued for all the various data. However, in the file server of the embodiment, the seven I/O barriers (the second I/O barrier to the eighth I/O barrier) are issued. Therefore, the number of the issuance times of the I/O barriers may be reduced by two. Particularly, in a case in which a large number of the files are simultaneously written, the number of the issuance times of the I/O barriers may be greatly reduced. As a result, it is possible to prevent a delay in the I/O processing and reduction in the running speed of the application software while properly assuring the writing order.

### (Specific Example of Deleting Data)

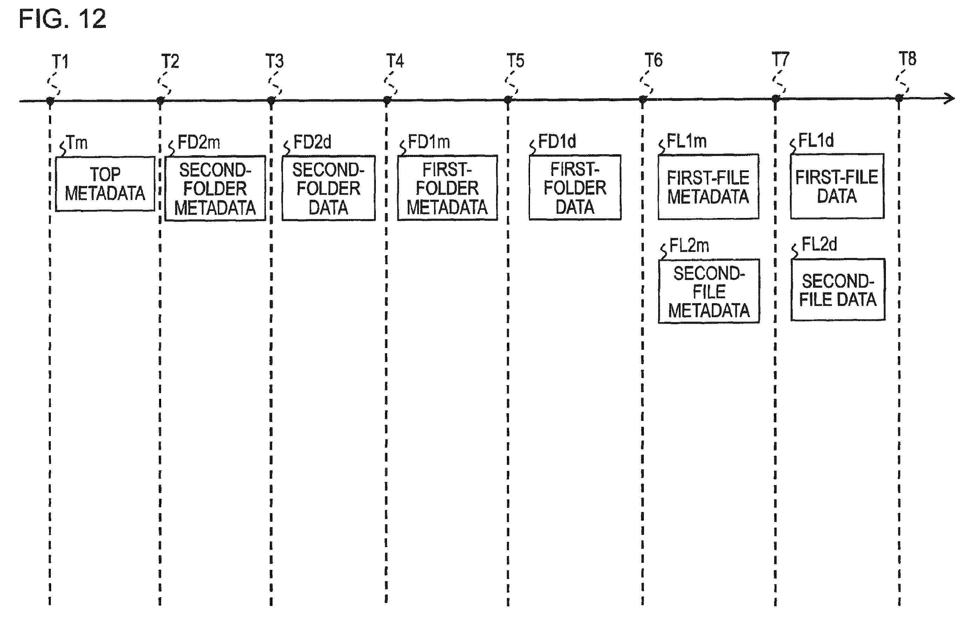

A description will be given, with reference to FIGS. 12 and 13, of a specific example of processing for releasing data in a case in which metadata to be released is not stored in the same page of the RAM 102. FIG. 12 is a diagram for specifically illustrating the processing for releasing data. The illustration exemplifies a case in which files and folders having the hierarchical structure illustrated in FIG. 4 are deleted from the first secondary storage device 1081.

In FIG. 12, a first time T1 to an eighth time T8 indicate the issuance times of the I/O barriers like FIG. 10, and a state in which various data is scheduled for the issuance times of the I/O barriers is schematically illustrated.

The task reception unit 11 of the file management software SF receives an instruction (releasing task) to delete the first file FL1, the second file FL2, and the first-folder data FD1d from, for example, the first secondary storage device 1081 (S1). Note that the file management software SF also deletes the following data when deleting the first file FL1, the second file FL2, and the first-folder data FD1d. That is, the file management software SF deletes the first-file metadata FL1m, the second-file metadata FL2m, and the first-folder metadata FD1m.

In order to reflect the above deletion of the data, the file management software SF updates the second-folder data FD2d, the second-folder metadata FD2m, and the top metadata Tm stored in the RAM 102.

The grouping unit 12 determines the following releasing order based on the management-relationship table TBL1 of FIG. 6 (S3). The releasing order is the order indicated by the broken-line arrow (see "deleting") from the top to the bottom in the example of FIG. 5. Specifically, the grouping unit 12 determines the releasing order such that the data is released from the first secondary storage device 1081 in the order from the data on the top side to the data on the bottom side in FIG. 5. Here, when the various data stored in the RAM 102 is updated so as to reflect the above deletion of the data, the release of the various data means the writing of the various data in the first secondary storage device 1081. In the above example, the releasing of the updated second-folder data FD2d, the second-folder metadata FD2m, and the top metadata Tm means the writing of the data (FD2d, FD2m, Tm) in the first secondary storage device 1081.

In the releasing order, the top metadata Tm is released first, and the second-folder metadata FD2m is released second. Further, the second-folder data FD2d is released third, and the first-folder metadata FD1m is released fourth. Further, in the releasing order, the first-folder data FD1d is released fifth, the first-file metadata FL1m and the second-file metadata FL2m are released sixth, and the first-file data FL1d and the second-file data FL2d are released seventh. The release of data FD1m, FD1d, FL1m, FL2m, FL1d, FL2d is deleting the data (for example writing "0" to the data).

### (Grouping)

The grouping unit 12 performs the grouping of the various data in the determined releasing order (S4). A first group includes the top metadata Tm, and a second group includes the second-folder metadata FD2m. A third group includes the second-folder data FD2d, and a fourth group includes the first-folder metadata FD1m. Further, a fifth group includes the first-folder data FD1d, a sixth group includes the first-file metadata FL1m and the second-file metadata FL2m, and a seventh group includes the first-file data FL1d and the second-file data FL2d.

The writing order assurance unit 13 performs scheduling in which the grouped various data is allocated to the preset issuance times as illustrated in FIG. 12 (S5). Note that the writing order assurance unit 13 ends scheduling processing such that the scheduling, which will be described later, ends before the first time T1.

The writing order assurance unit 13 performs the scheduling such that the updated top metadata Tm of the first group is written at the second time T2. Note that the updated top metadata Tm has been stored in the RAM 102.

The writing order assurance unit 13 performs the scheduling such that the updated second-folder metadata FD2m of the second group is written at the third time T3. Note that the updated second-folder metadata FD2m has been stored in the RAM 102.

The writing order assurance unit 13 performs the scheduling such that the updated second-folder data FD2d of the third group is written at the fourth time T4. Note that the updated second-folder metadata FD2m has been stored in the RAM 102.

The writing order assurance unit 13 performs the scheduling such that the first-folder metadata FD1m of the fourth group is released at the fifth time T5. In the releasing, the first-folder metadata FD1m is deleted from the first secondary storage device 1081.

The writing order assurance unit 13 performs the scheduling such that the first-folder data FD1d of the fifth group is released at the sixth time T6. In the releasing, the first-folder data FD1d is deleted from the first secondary storage device 1081.

The writing order assurance unit 13 performs the scheduling such that the first-file metadata FL1m and the second-file metadata FL2m of the sixth group are released at the seventh time T7. In the releasing, the first-file metadata FL1m and the second-file metadata FL2m are deleted from the first secondary storage device 1081.

The writing order assurance unit 13 performs the scheduling such that the first-file data FL1d and the second-file data FL2d of the seventh group are released at the eighth time T8. In the releasing, the first-file data FL1d and the second-file data FL2d are deleted from the first secondary storage device 1081.

### (Scheduling Information)

The writing order assurance unit 13 stores the issuance times of I/O barriers and the identifiers of metadata in the RAM 102 so as to be associated with each other. Specifically, the writing order assurance unit 13 stores scheduling information for managing releasing scheduling in the RAM 102.

FIG. 13 is a diagram illustrating scheduling information for managing releasing scheduling. FIG. 13 illustrates the scheduling information in a table form. A scheduling table TBL3 has the same configuration as that of the scheduling table TBL2 of FIG. 11. In the example of FIG. 13, the issuance times of the I/O barriers are stored in an issuance time column in the order of an elapse. In the example of FIG. 13, the symbols of the data illustrated in FIG. 12 are stored in an identifier column as identifiers.

In the above example, the updated top metadata Tm is scheduled to be written at the second time T2. Therefore, the writing order assurance unit 13 stores the identifier "Tm" of the top metadata Tm in the cell in which the identifier column crosses the row of the cell (T2) in which the second time T2 is stored.

In the above example, the updated second-folder metadata FD2m is scheduled to be written at the third time T3. Therefore, the writing order assurance unit 13 stores the identifier "FD2m" of the second-folder metadata FD2m scheduled for the third time T3 in the cell in which the identifier column crosses the row of the cell (T3) in which the third time T3 is stored. Note that the descriptions of the remaining times will be omitted.

### (Storage of Data in Volatile Internal Buffer)

The writing order assurance unit 13 outputs the various data scheduled for the respective issuance times, the releasing command, and the I/O barriers that are to be issued at the issuance times to the I/O controller 106 based on the scheduling table TBL3 of FIG. 13 (S11).

In the example of FIG. 13, the writing order assurance unit 13 outputs the following data and the releasing command to the I/O controller 106 (S11). That is, the writing order assurance unit 13 outputs the updated top metadata Tm scheduled for the second time T2 and a second I/O barrier to the I/O controller 106. Next, the writing order assurance unit 13 outputs the updated second-folder metadata FD2m scheduled for the third time T3 and a third I/O barrier to the I/O controller 106. Then, the writing order assurance unit 13 outputs the updated second-folder data FD2d scheduled for the fourth time T4 and a fourth I/O barrier to the I/O controller 106.

Next, the writing order assurance unit 13 outputs the releasing command of the first-folder metadata FD1m scheduled for the fifth time T5 and a fifth I/O barrier to the I/O controller 106. Then, the writing order assurance unit 13 outputs the releasing command of the first-folder data FD1d scheduled for the sixth time T6 and a sixth I/O barrier to the I/O controller 106. Next, the writing order assurance unit 13 outputs the releasing command of the first-file metadata FD1m and the second-file metadata FL2m scheduled for the seventh time T7 and a seventh I/O barrier to the I/O controller 106. Then, the writing order assurance unit 13 outputs the releasing command of the first-file data FL1d and the second-file data FL2d scheduled for the eighth time T8 and an eighth I/O barrier to the I/O controller 106.

The I/O controller 106 sequentially stores the received various data, the releasing commands, and the I/O barriers in the volatile internal buffer 107 (S12).

In the above example, the I/O controller 106 stores the various data, the releasing commands, and the I/O barriers in the volatile internal buffer 107 in the following order (S12). That is, the I/O controller 106 stores the updated top metadata Tm, the second I/O barrier, the updated second-folder metadata FD2m, and the third I/O barrier in the volatile internal buffer 107 in this order. Next, the I/O controller 106 stores the updated second-folder data FD2d, the fourth I/O barrier, the releasing command of the first-folder metadata FD1m, the fifth I/O barrier, the releasing command of the first-folder data FD1d, and the sixth I/O barrier in the volatile internal buffer 107 in this order. Then, the I/O controller 106 stores the releasing command of the first-file metadata FL1m and the second-file metadata FL2m and the seventh I/O barrier in the volatile internal buffer 107 in this order. Next, the I/O controller 106 stores the releasing command of the first-file data FL1d, the second-file data FL2d, and the eighth I/O barrier in the volatile internal buffer 107 in this order.

### (Issuance of I/O Barriers)

In parallel with the above scheduling, the writing order assurance unit 13 determines whether the current time is the issuance time of the I/O barrier (S21). By the following processing, the various data is written in the first secondary storage device 1081 in the determined writing order (or releasing order). In addition, by the following processing, the various data is released from the first secondary storage device 1081 in the determined writing order (or releasing order).

When the current time reaches the first time T1 (S21/YES), the writing order assurance unit 13 causes the I/O barrier management unit 14 to issue the first I/O barrier. With the issuance of the first I/O barrier, data scheduled to be written before the first time T1 is written before data scheduled to be written after the first time T1.

When the current time reaches the second time T2 (S21/YES), the writing order assurance unit 13 causes the I/O barrier management unit 14 to issue the second I/O barrier (S22). With the issuance of the second I/O barrier, the I/O controller 106 writes the updated top metadata Tm, which has been stored in the volatile internal buffer 107 before the second I/O barrier, in the first secondary storage device 1081. Then the processing returns to S21.

When the current time reaches the third time T3 (S21/YES), the writing order assurance unit 13 causes the I/O barrier management unit 14 to issue the third I/O barrier (S22). With the issuance of the third I/O barrier, the I/O controller 106 writes the updated second-folder metadata FD2m, which has been stored in the volatile internal buffer 107 before the third I/O barrier, in the first secondary storage device 1081. Then the processing returns to S21.

When the current time reaches the fourth time T4 (S21/YES), the writing order assurance unit 13 causes the I/O barrier management unit 14 to issue the fourth I/O barrier (S22). With the issuance of the fourth I/O barrier, the I/O controller 106 writes the updated second-folder data FD2d, which has been stored in the volatile internal buffer 107 before the fourth I/O barrier, in the first secondary storage device 1081. Then, the processing returns to S21.

When the current time reaches the fifth time T5 (S21/YES), the writing order assurance unit 13 causes the I/O barrier management unit 14 to issue the fifth I/O barrier (S22). With the issuance of the fifth I/O barrier, the I/O controller 106 executes the releasing command of the first-folder metadata FD1m that has been stored in the volatile internal buffer 107 before the fifth I/O barrier. With the execution of the releasing command, the I/O controller 106 releases the first-folder metadata FD1m from the first secondary storage device 1081. Then, the processing returns to S21.

When the current time reaches the sixth time T6 (S21/YES), the writing order assurance unit 13 causes the I/O barrier management unit 14 to issue the sixth I/O barrier (S22). With the issuance of the sixth I/O barrier, the I/O controller 106 executes the releasing command of the first-folder data FD1d that has been stored in the volatile internal buffer 107 before the sixth I/O barrier. With the execution of the releasing command, the I/O controller 106 releases the first-folder data FD1d from the first secondary storage device 1081. Then, the processing returns to S21.

When the current time reaches the seventh time T7 (S21/YES), the writing order assurance unit 13 causes the I/O barrier management unit 14 to issue the seventh I/O barrier (S22). With the issuance of the seventh I/O barrier, the I/O controller 106 executes the releasing command of the first-file metadata FL1m and the second-file metadata FL2m that have been stored in the volatile internal buffer 107 before the seventh I/O barrier. With the execution of the releasing command, the I/O controller 106 releases the first-file metadata FL1m and the second-file metadata FL2m from the first secondary storage device 1081. Then, the processing returns to S21.

When the current time reaches the eighth time T8 (S21/YES), the writing order assurance unit 13 causes the I/O barrier management unit 14 to issue the eighth I/O barrier (S22). With the issuance of the eighth I/O barrier, the I/O controller 106 executes the releasing command of the first-file data FL1d and the second-file data FL2d that have been stored in the volatile internal buffer 107 before the eighth I/O barrier. With the execution of the releasing command, the I/O controller 106 releases the first-file data FL1d and the second-file data FL2d from the first secondary storage device 1081. Then, the processing returns to S21.

As described above, the grouping unit 12 receives the instruction (deleting task) to delete the following data from the first secondary storage device 1081. That is, the grouping unit 12 receives the instruction to delete, for example, the first data (for example, the first-file data FL1d) managed by the first metadata (for example, the first-file metadata FL1m). In addition, the grouping unit 12 receives the instruction to delete the second data (for example, the second-file data FL2d) managed by the second metadata (for example, the second-file metadata FL2m).

The grouping unit 12 determines the following order based on the management-relationship table TBL1 of FIG. 6. That is, the updated third metadata is written in the first secondary storage device 1081 first, and the updated first and second metadata is written in the first secondary storage device 1081 second. The first metadata is, for example, the first-file metadata FL1m, and the second metadata is, for example, the second-file metadata FL2m. The updated third metadata is, for example, the first-folder metadata FD1m or the top metadata Tm.

Note that the first-file metadata FL1m, the second-file metadata FL2m, and the first-folder metadata FD1m are the released metadata as described in the above specific example of deleting the data. In the case of the released metadata like this, it is assumed that the number "0" is, for example, written in the region of the first secondary storage device 1081 in which the released metadata has been stored. On the other hand, the updated third metadata FD2m, Tm are written in the secondary storage medium 1081.

The writing order assurance unit 13 stores the first issuance time (for example, the seventh time T7), the identifier (for example, "FL1m") of the first metadata, and the identifier (for example, "FL2m") of the second metadata in the RAM 102 so as to be associated with each other (see FIG. 13). In addition, the writing order assurance unit 13 stores the second issuance time before the first issuance time (for example, the seventh time T7) and the identifier of the third metadata in the RAM 102 so as to be associated with each other (see FIG. 13). Note that when the third metadata is, for example, the first-folder metadata FD1m, the second issuance time is the fifth time T5 and the identifier of the third metadata is "FD1m." Further, when the third metadata is, for example, the top metadata Tm, the second issuance time is the second time T2 and the identifier of the third metadata is "Tm."

By the above scheduling in which the metadata of the grouped various data is allocated to the preset issuance times (see FIG. 12), the releasing order may be reliably maintained.

In addition, by the scheduling, the number of the issuance times of the I/O barriers may be reduced. For example, in the above specific example of releasing the data, the nine I/O barriers are issued corresponding to the nine units of the data when the I/O barriers are issued for all the various data. However, in the file server of the embodiment, the seven I/O barriers (the second I/O barrier to the eighth I/O barrier) are issued. Therefore, the number of the issuance times of the I/O barriers may be reduced by two. Particularly, in a case in which a large number of the files are simultaneously deleted, the number of the issuance times of the I/O barriers may be greatly reduced. As a result, it is possible to prevent reduction in the running speed of the application software while properly assuring the releasing order.

### (Same Page)

When different metadata stored in the RAM 102 is stored in the prescribed storage region unit (also called the page) of the RAM 102, the writing order assurance unit 13 performs processing for assuring the order of writing/deleting the metadata (same-page assurance processing).

FIG. 14 is a diagram schematically illustrating a state in which different metadata is stored in the same page of the RAM 102. FIG. 14 illustrates a state in which the RAM 102 stores the top metadata Tm and the second-folder metadata FD2m in a page PG1. Note that although not illustrated in the figures, the RAM 102 also stores, for example, the second-file data FL2d or the like.

When different metadata is stored in the same page of the RAM 102 like this, it is simultaneously stored in the first secondary storage device 1081. This is because access to (writing/reading of) the data stored in the RAM is performed on a page-by-page basis. It is assumed that different metadata is stored in the same page of the RAM 102 and scheduled for different issuance times. In this case, since the different metadata is simultaneously stored in the first secondary storage device 1081, the above determined writing/releasing order is not assured.

### (Same-Page Assurance Processing)

In view of the above circumstances, the writing order assurance unit 13 performs the following processing to assure the order of writing metadata or the order of releasing metadata. When different metadata is stored in the same page of the RAM 102 by the file management software SF, the writing order assurance unit 13 detects that the different metadata is stored in the same page of the RAM 102. Then, when any of the different metadata stored in the same page is updated, the writing order assurance unit 13 stores metadata having a content before being updated (metadata before being updated) in the RAM 102.

Note that the update of metadata includes newly generating metadata in the same-page assurance processing. When metadata is newly generated, metadata before being updated is empty metadata.

Then, the writing order assurance unit 13 detects a plurality of metadata stored in the same page of the RAM 102 and scheduled for different issuance times. In the example of FIG. 14, the top metadata Tm and the second-folder metadata FD2m are stored in the same page of the RAM 102. In the example of FIGS. 10 and 12, the top metadata Tm and the second-folder metadata FD2m are the metadata scheduled for the different issuance times. Therefore, the writing order assurance unit 13 detects the second-folder metadata FD2m and the top metadata Tm.

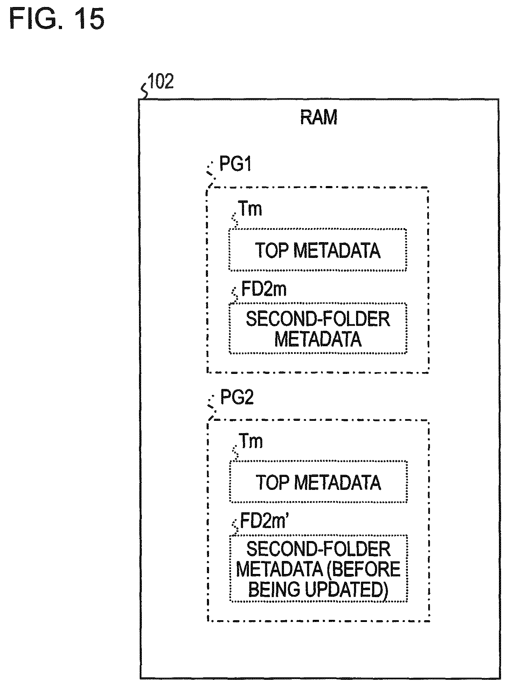

Next, the writing order assurance unit 13 specifies metadata before being updated, which corresponds to metadata scheduled for a subsequent issuance time, from the RAM 102. The metadata before being updated is, for example, second-folder metadata (before being updated) FD2m' of FIG. 15.

Then, the writing order assurance unit 13 specifies metadata stored in the same page as the metadata scheduled for the subsequent issuance time and scheduled for an issuance time before the subsequent issuance time. In the example of FIGS. 12 and 14, the metadata scheduled for the subsequent issuance time is the second-folder metadata FD2m. Further, the metadata, which is stored in the same page as the metadata scheduled for the subsequent issuance time and scheduled for the issuance time before the subsequent issuance time, is the top metadata Tm.

Next, the writing order assurance unit 13 stores these specified metadata in another page. The other page is a page different from the page in which the plurality of detected metadata is stored.

FIG. 15 is a diagram schematically illustrating a state in which the second-folder metadata FD2m' (before being updated) and the top metadata Tm are stored in a page PG2 of the RAM 102.

In the example of FIGS. 12 and 14, the writing order assurance unit 13 specifies the metadata before being updated (hereinafter referred to as the second-folder metadata FD2m' (before being updated)) corresponding to the second-folder metadata FD2m scheduled for the subsequent issuance time. Then, the writing order assurance unit 13 specifies the top metadata Tm scheduled for the issuance time before the subsequent issuance time.

As illustrated in FIG. 15, the writing order assurance unit 13 stores the second-folder metadata FD2m' (before being updated) and the top metadata Tm in the page PG2 different from the page PG1.

### (Rescheduling)

Further, the writing order assurance unit 13 reschedules the plurality of detected metadata. Specifically, the writing order assurance unit 13 reschedules the plurality of detected metadata as follows. That is, the writing order assurance unit 13 schedules the metadata before being updated FD2m', which corresponds to the metadata scheduled for the subsequent issuance time, for the same issuance time as the metadata scheduled for the issuance time before the subsequent issuance time. In other words, the writing order assurance unit 13 generates the page (the page PG2 in the example of FIG. 15) in which the content of the metadata to be subsequently written in the first secondary storage device 1081 is restored to the content of the metadata before being updated. Next, the writing order assurance unit 13 schedules this page for the previous issuance time.

Then, the writing order assurance unit 13 schedules the metadata after being updated for the subsequent issuance time.

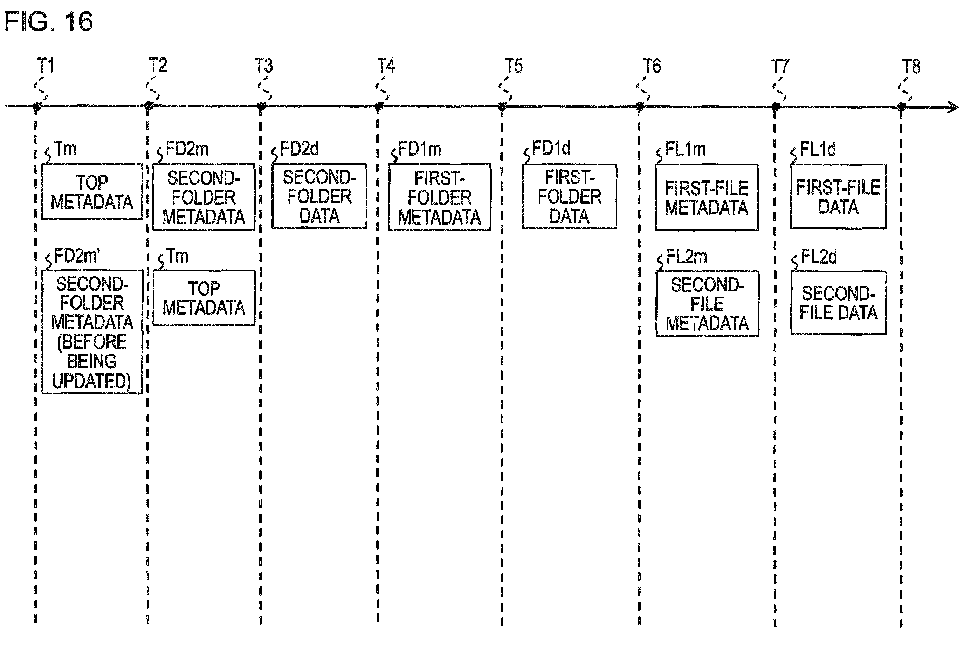

FIG. 16 is a diagram specifically illustrating the rescheduling of the metadata exemplified in FIGS. 14 and 15.

In the example of FIGS. 12, 14, and 15, the writing order assurance unit 13 schedules the top metadata Tm (after being updated) and the second-folder metadata FD2m' (before being updated) for the issuance time of the second time T2 (the previous issuance time). Then, the writing order assurance unit 13 schedules the top metadata Tm (after being updated) and the second-folder metadata FD2m (after being updated) for the third time T3 (the subsequent issuance time).

When performing the rescheduling, the writing order assurance unit 13 generates scheduling information including the content of the rescheduling and stores the same in the RAM 102.

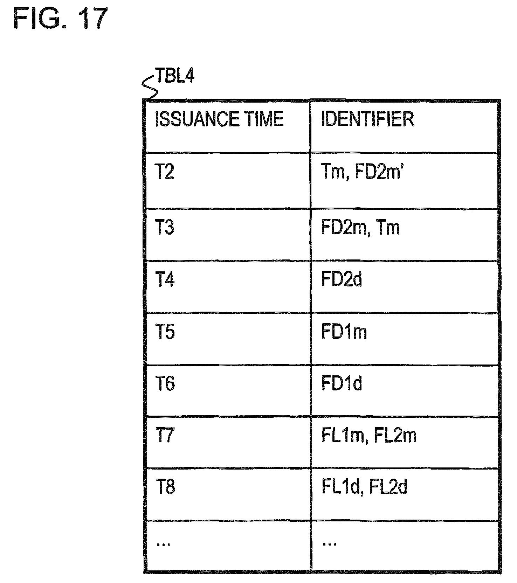

FIG. 17 is a diagram illustrating the scheduling information after the rescheduling. A scheduling table TBL4 of FIG. 17 has the same configuration as that of the scheduling table TBL3 of FIG. 11. In the example of FIG. 17, the symbols of the data illustrated in FIG. 16 are stored in an identifier column as identifiers.

In the example of FIG. 16, the top metadata Tm (after being updated) and the second-folder metadata FD2m' (before being updated) are scheduled to be written for the issuance time of the second time T2. Therefore, the grouping unit 12 stores the identifier "Tm" of the top metadata Tm scheduled for the second time T2 in the cell in which the identifier column crosses the row of the cell (T2) in which the second time T2 is stored. In addition, the grouping unit 12 stores the identifier "FD2m"' of the second-folder metadata FD2m' (before being updated) in the cell in which the identifier "Tm" is stored.

Further, in the example of FIG. 16, the second-folder metadata FD2m after being updated and the top metadata Tm after being updated are scheduled to be written for the third time T3. Therefore, the grouping unit 12 stores the identifier "FD2m" of the second-folder metadata FD2m scheduled for the third time T3 in the cell in which the identifier column crosses the row of the cell (T3) in which the third time T3 is stored. In addition, the grouping unit 12 stores the identifier "Tm" of the top metadata Tm in the cell in which the identifier "FD2m" is stored.

Even if the different metadata is stored in the same page of the RAM 102 and scheduled for the different issuance times, the above determined writing/releasing order is assured by the above rescheduling. That is, the order of Tm and FD2m is same in FIGS. 12 and 16.

The writing order assurance unit 13 outputs the various data scheduled for the respective issuance times and I/O barriers to be issued at the issuance times to the I/O controller 106 based on the scheduling table TBL4 of FIG. 17 (S11). The I/O controller 106 sequentially stores the received various data and the I/O barriers in the volatile internal buffer 107 (S12). Subsequently, the I/O barriers are issued (S21, S22), and the various data is stored in the first secondary storage device 1081 in the determined writing order (or releasing order). In addition, the various data is released from the first secondary storage device 1081 in the determined writing order (or releasing order).

As described above, the writing order assurance unit 13 performs the following processing in the following first and second cases. In the first case, second metadata (for example, the second-folder metadata FD2m) and third metadata (for example, the top metadata Tm) are stored in the same page of the RAM 102. In the second case, a first issuance time is a time before a second issuance time.

The second issuance time is a time with which the identifier of the second metadata stored in the RAM 102 is associated. When the second metadata is, for example, the second-folder metadata FD2m, the second issuance time is the third time T3 according to the scheduling table TBL4 of FIG. 17.

In the first and second cases, the writing order assurance unit 13 stores the first issuance time (for example, the second time T2), the identifier (for example, "FD2m"') of the second metadata before being updated, and the identifier (for example, "Tm") of the third metadata after being updated in the RAM 102 so as to be associated with each other. In addition, the writing order assurance unit 13 stores the second issuance time (for example, the third time T3), the identifier (for example, "FD2m") of the second metadata after being updated, and the identifier ("Tm") of the third metadata after being updated in the RAM 102 so as to be associated with each other.

Note that even with the above file management technology, the data stored in the RAM 102 is lost if the abnormal termination occurs before the data is written in the secondary storage device. However, it seems that the lost of the data itself is inevitable from the viewpoint of a trade-off for the performance of a writing system call (for example, the system call is performed at a high speed). Therefore, by the following first and second methods, a response to processing for writing specific data that needs the limitation of the influence range of the data or assurance at ending the writing of the data is made. Note that the specific data is data to be subjected to transaction processing as an inseparable processing unit. The first method is a method for periodically writing the data stored in the RAM 102 in the secondary storage device. The second method is a method for implementing, besides a writing system call, a system call to assure the ending of writing data specified as writing data in the secondary storage device at ending the issuance of the writing system call.

### (Second Embodiment)

In order to reduce a time for the processing for confirming the consistency of metadata and a time for the processing for recovering the consistency of the metadata described in the first embodiment, there has been proposed a technology for writing history data indicating the history (also called the update history) of processing performed on the metadata in the secondary storage device. A region in which an updated content is written is called a "journal region" and serves as the special region of the secondary storage device. The technology is also called journaling. According to the technology, the history data (also called the journal log) of metadata is written in the first secondary storage device 1081 when the metadata of the RAM 102 is, for example, updated.

A technology for accelerating the processing for confirming and recovering the consistency of metadata is called a journaling file system. Examples of the journaling file system include Ext3 of Linux (TM), NTFS of Windows (TM), and HFS+ of MacOS (TM). Note that Ext3 is an abbreviation for "third extended file system," NTFS is an abbreviation for "NT File System," and HFS+ is an abbreviation for "Hierarchical File System Plus."

When the file server SVR restarts after its abnormal termination due to the occurrence of a failure, the file management software SF is not allowed to read data not influenced by the abnormal termination until processing for confirming and recovering the consistency of metadata ends. Accordingly, when an information processing system having a large-scale file system does not use one of or all the above consistency maintaining technology and the journaling file system, "MMTR" may become significantly long. Note that "MMTR" is a time (Mean Time To Repair) until the processing for recovering ends after the occurrence of a failure.

### (Application of Journaling)

In order to accelerate the processing for confirming and recovering the consistency of metadata and reduce a processing load, there has been developed a technology for applying the journaling to the metadata consistency maintaining technology (above "Soft Updates") described in the first embodiment. The metadata consistency maintaining technology with the journaling includes referring to journal logs and performing the above processing for confirming and recovering on the first secondary storage device 1081.

Note that the journaling may be applied to the metadata consistency maintaining technology in the following case. If the file server SVR abnormally terminates before metadata is actually written in the secondary storage device in releasing data as described above, the following state may occur. In this state, data that has been actually released is registered (stored) as having been not released in the metadata of the secondary storage device. In this case, it is desired to perform processing for recovering from such a state. Since the processing for recovering (also called collection processing) does not need to be performed immediately after the start of the file server SVR, a time for restarting the file server SVR is not delayed due to the collection processing.

However, since access to files is made to the secondary storage device while the collection processing is performed as background processing after the starting of the file server SVR, a processing load increases. Therefore, the journaling is performed in releasing data to reduce a data amount of logs in the journaling. The metadata consistency maintaining technology with the journaling includes referring to journal logs and recovering from the above state.

### (Scheduling of Journal Logs)

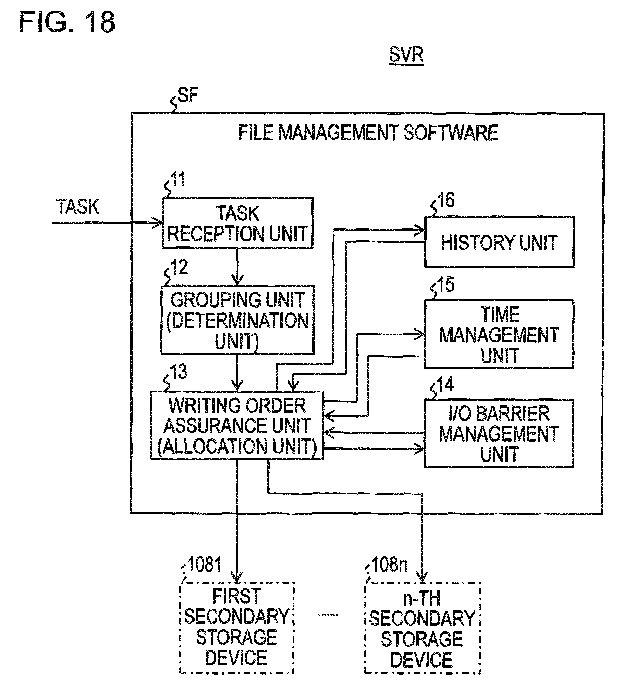

FIG. 18 is a second software block diagram of the file server SVR of FIG. 1. A file management software SF has a history unit 16, besides the respective units of the file management software SF of FIG. 3. The history unit 16 generates history data (hereinafter suitably referred to as logs) indicating the history of processing to metadata. When metadata is updated, the history unit 16 generates the log of the metadata and stores the same in the RAM 102. Before writing the updated metadata in the first secondary storage device 1081, the file management software SF writes a log including an updated content in the first secondary storage device 1081. In other words, the order of writing the log and the metadata needs to be assured. In addition, when there are a plurality of logs, the order of writing the logs needs to be assured. In order to maintain the writing order, I/O barriers need to be issued as described in the first embodiment. Further, a delay in processing due to the issuance of the I/O barriers needs to be reduced.

Particularly, when the file management software SF issues an I/O barrier every time a log is written in the first secondary storage device 1081, it takes a significantly longer time to return control to application software due to the issuance of the I/O barriers as described in the first embodiment. As a result, a file management method with the journaling is likely to take a longer time to return control to application software than a file management method without the journaling.

Therefore, the grouping unit 12 groups the log of updated metadata at an issuance time (for example, a previous issuance time) before an issuance time for which the updated metadata is scheduled. Then, the writing order assurance unit 13 updates scheduling information.

### (Grouping)

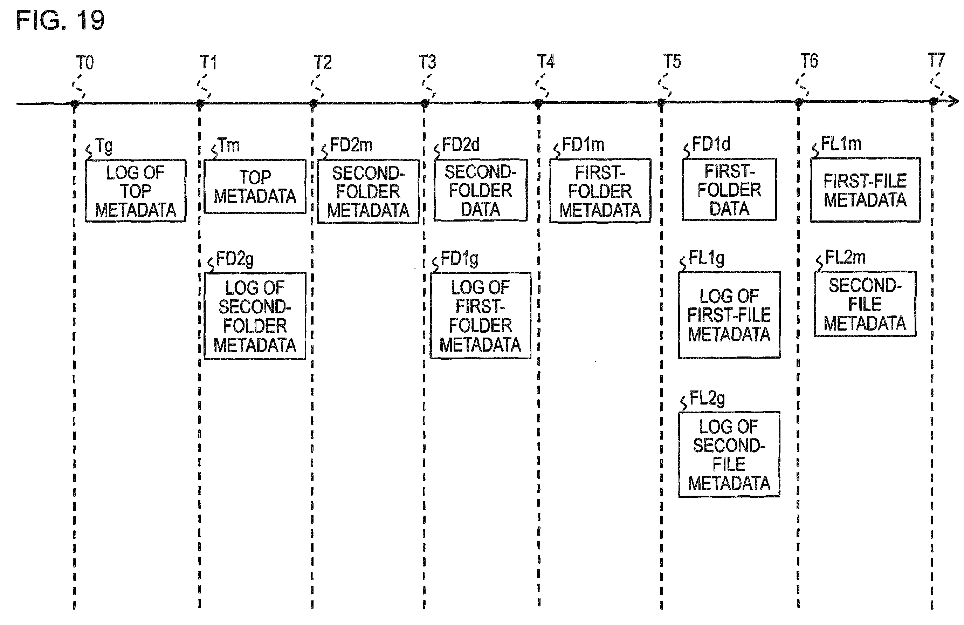

FIG. 19 is a diagram specifically illustrating processing for writing logs. In FIG. 19, the content of the eighth time T8 of FIG. 12 is omitted, and the content of a zero-th time T0 to the first time T1 is newly added. In FIG. 19, data is deleted in the order illustrated in FIG. 12.

The file management software SF generates a log Tg of top metadata, a log FD2g of second-folder metadata, a log FD1g of first-folder metadata, a log FL1g of first-file metadata, and a log FL2g of second-file metadata and stores the same in the RAM 102.

Next, the grouping unit 12 determines the order of releasing data other than the logs as described in the above specific example of deleting the data (S3). Then, the grouping unit 12 re-groups the logs of updated metadata at issuance times before issuance times for which the updated metadata is scheduled.

The grouping unit 12 groups the log Tg of the top metadata at the first time T1 that is an issuance time before the second time T2. The grouping unit 12 groups the log FD2g of the second-folder metadata besides the top metadata Tm at the second time T2 that is an issuance time before the third time T3. The grouping unit 12 groups the log FD1g of the first-folder metadata besides the second-folder data FD2d at the fourth time T4 that is an issuance time before the fifth time T5.

The grouping unit 12 groups the following logs besides the first-file metadata FL1m and the second-file metadata FL2m at the sixth time T6 that is an issuance time before the seventh time T7. That is, the grouping unit 12 groups the log FL1g of the first-file metadata and the log FL2g of the second-file metadata at the sixth time T6.

### (Scheduling Information)

The writing order assurance unit 13 generates scheduling information in which re-grouped information is updated and stores the generated scheduling information in the RAM 102.

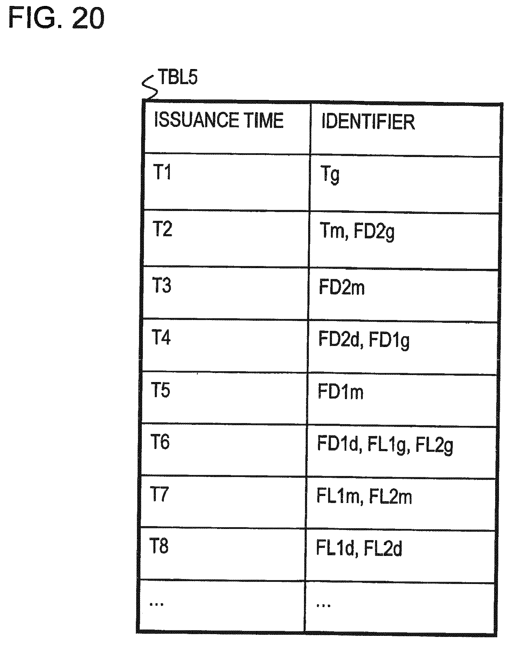

FIG. 20 is a diagram illustrating scheduling information in which re-grouped information is updated. FIG. 20 illustrates the scheduling information in a table form. A scheduling table TBL5 has the same configuration as that of the scheduling table TBL2 of FIG. 11. In the example of FIG. 20, the symbols of the data of FIG. 12 are stored in an identifier column as identifiers.

In the above example, the log Tg of the top metadata is scheduled to be written at the first time T1. Therefore, the writing order assurance unit 13 stores the identifier "Tg" of the log Tg of the top metadata scheduled for the first time T1 in the cell in which the identifier column crosses the row of the cell (T1) in which the first time T1 is stored.

In addition, the top metadata Tm and the log FD2g of the second-folder metadata are scheduled to be written at the second time T2. Therefore, the writing order assurance unit 13 stores the following identifiers in the cell in which the identifier column crosses the row of the cell (T2) in which the second time T2 is stored. The identifiers include the identifier "Tm" of the top metadata Tm and the identifier "FD2g" of the log FD2g of the second-folder metadata scheduled for the second time T2. Note that the descriptions of the remaining times will be omitted.

As described above, the writing order assurance unit 13 stores target issuance times that are issuance times before issuance times with which the stored identifiers of the metadata are associated, and the identifiers of the logs (also called the log identifiers) of the metadata in the RAM 102, so as to be associated with each other. In the example of FIG. 20, the metadata is, for example, the top metadata Tm, the issuance time is, for example, the second time T2, and the issuance time before the second time T2 is, for example, the first time T1. In addition, the log of the metadata is, for example, the log Tg of the top metadata, and the identifier of the log is, for example, "Tg."

The writing order assurance unit 13 sequentially stores the logs identified by the identifiers stored so as to be associated with the target issuance times that are the previous issuance times and I/O barriers corresponding to the target issuance times that are the previous issuance times in the volatile internal buffer 107 based on the determined writing order.

When the target issuance times that are the previous issuance times are reached, the I/O controller 106 writes the metadata and the logs, which have been stored in the volatile internal buffer 107 before the I/O barriers corresponding to the target issuance times, in the first secondary storage device 1081.

Specifically, the writing order assurance unit 13 outputs the various data (including the logs) scheduled for the respective issuance times and the I/O barriers issued at the issuance times to the I/O controller 106 based on the scheduling table TBL5 of FIG. 20 (S11). The I/O controller 106 sequentially stores the received various data and the I/O barriers in the volatile internal buffer 107 (S12). Then, the I/O barriers are issued (S21, S22), and the various data is written in the first secondary storage device 1081 in the determined writing order. Further, the various data is released from the first secondary storage device 1081 in the determined writing order.

In the embodiment, the I/O barriers issued for other various data are used as the I/O barriers for the logs. Accordingly, the number of the issuance times of the I/O barriers may be reduced to assure the order of writing the respective logs in the first secondary storage device 1081. In the example of FIG. 19, when the scheduling of the embodiment is not performed, the I/O barriers dedicated to the four logs need to be issued four times to assure the order of writing the respective logs in the first secondary storage device 1081. However, since the I/O barriers for other various data are used as the I/O barriers for the logs in the embodiment, dedicated I/O barriers do not need to be issued to assure the order of writing the respective logs in the first secondary storage device 1081.

Note that as a method for reducing the issuance of I/O barriers, there has been known a method in which the issuance of the I/O barriers is reduced while reducing the risk of interrupting a power supply by a duplexing system using the power supply or an uninterruptible power supply system in an information processing system less susceptible to a change in metadata. Note that the information processing system in which metadata is changed relatively low frequently, for example, a system including a file server that stores, as mainly-updated files, specific and a small number of files used by a database management system.

However, the above method is impractical because it still suffers from, besides an increase in the costs of the above countermeasures, the risk of losing the consistency of metadata when the countermeasures for the interruption of the power supply is not effective.

## Claims

1. A file system comprising:
a first storage device (1081);
a second storage device (107) that stores data to be written in the first storage device, the data being stored in a main storage device;
a management unit (15) that manages issuance times of writing instructions;
a determination unit (12) that determines a writing order of writing respective metadata, which serve as management data of respective data, in the first storage device based on management information (TBL1) indicating a management relationship between the respective metadata;
an allocation unit (13) that sequentially stores, when identifiers that identify the respective metadata and the issuance times of the respective writing instructions are stored so as to be associated with each other, the metadata identified by the identifiers stored corresponding to the issuance times of the writing instructions and the writing instructions corresponding to the metadata, in the second storage device based on the determined writing order; and
a control unit (106) that writes, when the issuance times of the writing instructions are reached, the metadata which is stored in the second storage device before the writing instructions corresponding to the reached issuance times, in the first storage device.

2. The file system according to claim 1, wherein
the allocation unit (13) stores at least one issuance time and identifiers of a plurality of metadata (TBL2) so as to be associated with each other.

3. The file system according to claim 2, wherein
the determination unit (12) determines an order of writing first metadata (FL1m), second metadata (FL2m), and third metadata (FD1m) associated with the first and second metadata in the first storage device based on the management information, and
the allocation unit (13) stores a first issuance time (T3) managed by the management unit and identifiers of the first and second metadata (FL1m, FL2m) so as to be associated with each other, and stores a second issuance time (T5) managed by the management unit and an identifier of the third metadata (FD1m) so as to be associated with each other.

4. The file system according to claim 3, wherein
when receiving an instruction to write first data (FL1d) managed by the first metadata (FL1m) and second data (FL2d) managed by the second metadata (FL2m) in the first storage device, the determination unit (12) determines a first order of writing the first metadata (FL1m) and the second metadata (FL2m) in the first storage device and a second order of writing the third metadata (FD1m) in the first storage device, based on the management information (TBL1), and
the allocation unit (13) stores the second issuance time (T5) after the first issuance time (T3) and the identifier of the third metadata (FD1m) so as to be associated with each other.

5. The file system according to claim 3, wherein
when receiving an instruction to delete, from the first storage device, first data (FL1d) that is managed by the first metadata (FL1m) and has been written in the first storage device and second data (FL2d) that is managed by the second metadata (FL2m) and has been written in the first storage device, the determination unit determines (12) that a first order of writing the updated third metadata (Tm, FD1m) in the first storage device and a second order of writing the updated first and second metadata (FL1m, FL2m) in the first storage device, based on the management information (TBL1), and
the allocation unit (13) stores the second issuance time (T2, T5) before the first issuance time (T7) and the identifier of the third metadata so as to be associated with each other.

6. The file system according to claim 3, wherein,
when the second metadata (FL2m) and the third metadata (Tm) stored in the main storage device are stored in a same storage-region unit (PG1) of the main storage device and the first issuance time (T3) is a time after the second issuance time (T2), the allocation unit (13) stores the identifier of the second metadata (FD2m') before being updated and the identifier of the third metadata (Tm) after being updated in association with the second issuance time (T2), and stores the identifier of the second metadata (FD2m) after being updated and the identifier of the third metadata (Tm) after being updated in association with the first issuance time (T3).

7. The file system according to claim 1, further comprising:
a history unit (16) that generates history data indicating a history of processing performed on the metadata, wherein
the allocation unit (13) stores target issuance times (T2), which are issuance times before issuance times (T3) with which the stored identifiers of the metadata (FD2m) are associated, and history identifiers (FD2g) of history data of the metadata (FD2m), so as to be associated with each other,
the allocation unit sequentially stores history data identified by the history identifiers (FD2g) stored in associated with the target issuance times (T2) and the writing instructions (I/O barrier) corresponding to the target issuance times (T2) in the second storage device based on the determined writing order, and
when the target issuance times (T2) are reached, the control unit writes, in the first storage device, history data (FD2g) and the metadata (Tm) stored in the second storage device before the writing instructions corresponding to the target issuance times (T2).

8. The file system according to claim 1, wherein
the management unit places a prescribed time interval between the issuance time and an issuance time subsequent to the issuance time.

9. A control method of a file system including a first storage device, a second storage device that stores data to be written in the first storage device, the data being stored in a main storage device and a management unit that manages issuance times of writing instructions,
the control method comprising:
determining, by a determination unit of the file system, a writing order of writing respective metadata, which serve as management data of respective data, in the first storage device based on management information indicating a management relationship between the respective metadata;
storing sequentially, by an allocation unit of the file system, when identifiers that identify the respective metadata and the issuance times of the respective writing instructions are stored so as to be associated with each other, the metadata identified by the identifiers stored corresponding to the issuance times of the writing instructions and the writing instructions corresponding to the metadata, in the second storage device based on the determined writing order; and
writing, by a control unit, when the issuance times of the writing instructions are reached, the metadata which is stored in the second storage device before the writing instructions corresponding to the reached issuance times, in the first storage device.

10. A non-transitory computer-readable recording medium having stored therein a control program of a file system, including a first storage device, a second storage device that stores data to be written in the first storage device, the data being stored in a main storage device, and
a management unit that manages issuance times of writing instructions, for causing a computer to execute a process comprising:
determining, by a determination unit of the file system, a writing order of writing respective metadata, which serve as management data of respective data, in the first storage device based on management information indicating a management relationship between the respective metadata;
storing sequentially, by an allocation unit of the file system, when identifiers that identify the respective metadata and the issuance times of the respective writing instructions are stored so as to be associated with each other, the metadata identified by the identifiers stored corresponding to the issuance times of the writing instructions and the writing instructions corresponding to the metadata, in the second storage device based on the determined writing order; and
writing, by a control unit of the file system has, when the issuance times of the writing instructions are reached, the metadata which is stored in the second storage device before the writing instructions corresponding to the reached issuance times, in the first storage device.
